# EUROPEAN PATENT APPLICATION

(11) **EP 4 316 906 A1**
(43) Date of publication of application: **07.02.2024**
(21) Application number: 22779719.8
(22) Date of filing: 25.02.2022
(51) Int. Cl.: B60N 2/40, B62J 1/12, B62J 1/28, A47C 27/08, A47C 27/10

(54) **STRADDLING-TYPE SEAT**

(30) Priority: 31.03.2021 JP 2021061786; 09.04.2021 JP 2021066650
(71) Applicant: TS Tech Co., Ltd., Asaka-shi Saitama 351-0012 (JP)
(72) Inventor: TAKEI, Hirotaka, Shioya-gun, Tochigi 329-1217 (JP); CHIBA, Tomohisa, Shioya-gun, Tochigi 329-1217 (JP); OGAWA, Tatsuro, Shioya-gun, Tochigi 329-1217 (JP); ISHIZAKI, Toru, Shioya-gun, Tochigi 329-1217 (JP)
(74) Representative: Grünecker Patent- und Rechtsanwälte PartG mbB
(86) International application number: PCT/JP2022/008024
(87) International publication number: WO 2022/209494

(57) **Abstract**

A straddling-type seat including a movable backrest and reducing the number of parts is provided. In a straddling-type seat (S) including a backrest (B) movable with respect to a seat body (S), the backrest (B) includes a pipe frame (24) which extends in the moving direction of the backrest (B), the seat body (S) includes a bottom plate (10) through which the pipe frame (24) is inserted, a lock plate (31) which comes into contact with the pipe frame (24) to prohibit the movement of the backrest (B), and a lock cover (32) which covers the lock plate (31), and the lock cover (32) completely covers the pipe frame (24).

## Description

### TECHNICAL FIELD

The present invention relates to a straddling-type seat and particularly to a straddling-type seat including a backrest.

### BACKGROUND ART

Among motorcycle seats, there is known one in which a rear seat on which another occupant sits is formed one step higher behind a front seat on which a driver sits and a backrest for the driver to lean on is provided on a stepped portion located at the border of those seats. In such a motorcycle seat, there is known a technique for changing the seating position of the driver by making the backrest movable and adjustable in the front to rear direction.

PATENT LITERATURE 1 describes one in which a strap serving as an operation member bonded to one end of a lock plate is pulled in a lateral unlocking direction so that a fitting hole of the lock plate is removed from a fitting slit of a pipe frame and a backrest is movable and adjustable in the front to rear direction.

### CITATION LIST

### PATENT LITERATURE

PATENT LITERATURE 1: WO 2016/021414 A

### SUMMARY OF INVENTION

### TECHNICAL PROBLEM

In the technique described in PATENT LITERATURE 1, since the strap is attached to the lock plate, the number of parts increases.

The present invention has been made in view of the above-described problems and an object thereof is to provide a straddling-type seat including a movable backrest and reducing the number of parts.

### SOLUTION TO PROBLEM

The above-described problems are solved by a straddling-type seat including a backrest movable with respect to a seat body, wherein the backrest includes an adjustment member that extends in a moving direction of the backrest, wherein the seat body includes a bottom plate through which the adjustment member is inserted, a lock member that comes into contact with the adjustment member to prohibit the movement of the backrest, and a cover member that covers the lock member, and wherein the cover member completely covers the adjustment member.

In the straddling-type seat of the present invention with the above-described configuration, grease is applied to the surface of the adjustment member so that the adjustment member slides smoothly, but it is possible to prevent the grease from dripping downward and adhering to the vehicle body or the like by completely covering the adjustment member with the cover member.

In the straddling-type seat, the cover member may be provided with an extending portion which extends in a moving direction of the adjustment member, and the extending portion may overlap the adjustment member in an up to down direction of the straddling-type seat.

In the above-described configuration, since it is possible to appropriately cover the adjustment member, it is possible to prevent the grease from dripping downward and adhering to the vehicle body or the like.

In the straddling-type seat, the lock member may include an operation portion which is operated when moving the backrest, the operation portion may protrude toward the outside of the cover member, the cover member may include a recess which is recessed upward, the operation portion may be disposed in the recess and protrude outward from an opening portion formed in the cover member, the lock member may include a bent portion which is bent from the operation portion, and the bent portion may be disposed to fill a gap between the operation portion and the opening portion in bottom view of the straddling-type seat.

In the above-described configuration, it is possible to suppress the entrance of foreign matter by filling a gap between the lock member and the cover member around the opening portion.

In the straddling-type seat, a length of a portion in which the bent portion and the cover member overlap each other in the up to down direction of the straddling-type seat in a locked state in which the movement of the backrest is prohibited may be longer than a maximum movement amount of the lock member.

In the above-described configuration, it is possible to suppress the entrance of foreign matter even in a state in which the lock member is slid for unlocking.

In the straddling-type seat, the operation portion may include a bottom portion which extends in a width direction of the straddling-type seat and a connection portion which connects the bottom portion and the bent portion, and the bent portion may be shorter than the connection portion.

In the above-described configuration, it is possible to make the operation portion compact.

In the straddling-type seat, the operation portion may include a side wall which is formed at a position facing the connection portion in the width direction of the straddling-type seat to be bent from the bottom portion.

In the above-described configuration, since it is possible to grip the connection portion and the side wall with fingers when operating the operation portion, the operability is improved.

In the straddling-type seat, the bottom plate may be provided with a through-hole through which the adjustment member is inserted, a protection member may be provided on the front side of the through-hole, the protection member may include a protection portion through which the adjustment member is inserted, and the protection portion may be formed so that the upper side is longer than the lower side.

In the above-described configuration, it is possible to prevent the adjustment member from being wet due to the water entering from the gap when moving the backrest and it is possible to suppress water from entering the fitting portion of the adjustment member and the lock member even when the adjustment member is moved to the frontmost portion by lengthening the upper side of the protection portion.

The straddling-type seat may further include a ring-shaped rib portion which is formed inside the protection portion to protrude inward and the rib portion may come into contact with an outer surface of the adjustment member.

In the above-described configuration, since it is possible to appropriately cover a gap between the inner surface of the protection portion and the outer surface of the pipe frame, it is possible to suppress water from entering the inside of the seat body.

In the straddling-type seat, the lock member may include an operation portion which is operated when moving the backrest, a plurality of the adjustment members may be provided, the operation portion may be a plurality of bolts provided to engage with the plurality of adjustment members, and a reinforcing portion may be provided between the plurality of bolts.

In the above-described configuration, when the operation portion is the bolt, the number of bolts corresponding to the number of adjustment members is also required and a plurality of receiving holes of the bolts are provided in the cover member. As a result, it is possible to increase the strength by reinforcing the fragile portion between the receiving holes of the bolts.

Further, the movable body includes right and left third movable bodies disposed between the first movable body and the second movable body in the up to down direction of the seat back frame, the third movable body includes a plurality of inflatable and deflatable bags, and the plurality of bags are stacked to have different sizes and be arranged in different directions.

According to the above-described configuration, since the seated occupant is supported by the third movable body in addition to the first movable body and the second movable body, it is possible to enhance the supportability of the seated occupant. Further, it is possible to deform the third movable body into a flexible shape and size and to appropriately support the seated occupant according to the body shape of the seated occupant.

### ADVANTAGEOUS EFFECTS OF INVENTION

According to the straddling-type seat of the present invention, since the lock member is directly moved by the operation portion provided at the center portion of the straddling-type seat in the width direction while having a good appearance by covering the lock member with the cover member, it is possible to reduce the number of parts.

Further, according to the straddling-type seat of the present invention, it is possible to compactly dispose the operation portion.

Further, according to the straddling-type seat of the present invention, it is possible to suppress the entrance of foreign matter by filling a gap between the lock member and the cover member around the opening portion.

Further, according to the straddling-type seat of the present invention, it is possible to suppress the entrance of foreign matter even in a state in which the lock member is slid for unlocking.

Further, according to the straddling-type seat of the present invention, it is possible to make the operation portion compact.

Further, according to the straddling-type seat of the present invention, since it is possible to grip the connection portion and the side wall with fingers when operating the operation portion, the operability is improved.

Further, according to the straddling-type seat of the present invention, the operator can intuitively understand the operation direction of the operation portion.

Further, according to the straddling-type seat of the present invention, it is possible to prevent the adjustment member from being wet due to the water entering from the gap when moving the backrest and it is possible to suppress water from entering the fitting portion of the adjustment member and the lock member even when the adjustment member is moved to the frontmost portion by lengthening the upper side of the protection portion.

Further, according to the straddling-type seat of the present invention, since it is possible to appropriately cover a gap between the inner surface of the protection portion and the outer surface of the pipe frame, it is possible to suppress water from entering the inside of the seat body.

Further, according to the straddling-type seat of the present invention, when the operation portion is the bolt, the number of bolts corresponding to the number of adjustment members is also required and a plurality of receiving holes of the bolts are provided in the cover member. As a result, it is possible to increase the strength by reinforcing the fragile portion between the receiving holes of the bolts.

### BRIEF DESCRIPTION OF DRAWINGS

FIG. 1 is an external view of a motorcycle including a motorcycle seat according to an embodiment of the present invention.
FIG. 2 is an external view of the motorcycle seat according to the embodiment of the present invention.
FIG. 3 is a back surface view of the motorcycle seat.
FIG. 4 is an exploded perspective view of a locking mechanism.
FIG. 5 is a perspective view of a lock plate and a lock cover.
FIG. 6 is a bottom view of the lock plate and the lock cover.
FIG. 7 is a diagram showing the lock cover attached to a bottom plate.
FIG. 8 is a partially enlarged view of a back surface of the bottom plate in which the lock cover is removed.
FIG. 9 is a perspective view of the lock plate.
FIG. 10 is a cross-sectional view taken along a line A-A of FIG. 8.
FIG. 11 is a schematic view showing an operation of the lock plate.
FIG. 12 is a perspective view of the motorcycle seat in which a cushion pad and a skin material are not illustrated.
FIG. 13 is a cross-sectional view taken along a line B-B of FIG. 2.
FIG. 14 is a view corresponding to a cross-sectional view taken along a line B-B of FIG. 2 showing an enlarged periphery of a protection member in a state in which a backrest is disposed on the frontmost side.
FIG. 15 is a schematic view illustrating a motorcycle seat according to a modified example.
FIG. 16 is a cross-sectional view taken along a line C-C of FIG. 15.
FIG. 17 is a back surface view of the motorcycle seat according to the modified example.
FIG. 18 is a diagram showing a lock cover attached to a bottom plate of the motorcycle seat according to the modified example.
FIG. 19 is an external view of a motorcycle seat according to a second embodiment.
FIG. 20 is an exploded perspective view of the motorcycle seat.
FIG. 21 is a cross-sectional view taken along a line A-A of FIG. 19.
FIG. 22 is a diagram showing a front pad from below and is a diagram showing the arrangement of air cells.
FIG. 23 is a cross-sectional view taken along a line B-B of FIG. 22.
FIG. 24 is a block diagram showing a configuration of a fluid supply device and an air cell.
FIG. 25 is an external view of the fluid supply device.
FIG. 26 is a diagram showing the front pad from below and is a diagram showing the arrangement of planar heating elements.
FIG. 27 is a diagram showing an order in which air cells are inflated and deflated.
FIG. 28 is a diagram showing a flow of a fatigue reduction process.
FIG. 29 is a diagram showing a flow of manufacturing procedures for the motorcycle seat.
FIG. 30 is an external view of a motorcycle seat according to a modified example.
FIG. 31 is a diagram showing the back surface side of a front pad and the arrangement of air cells according to the modified example.

### DESCRIPTION OF EMBODIMENTS

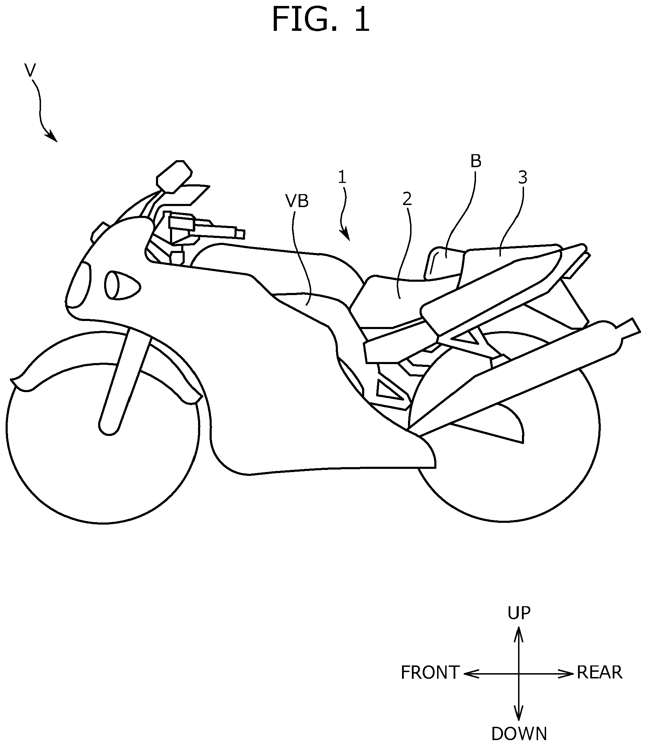

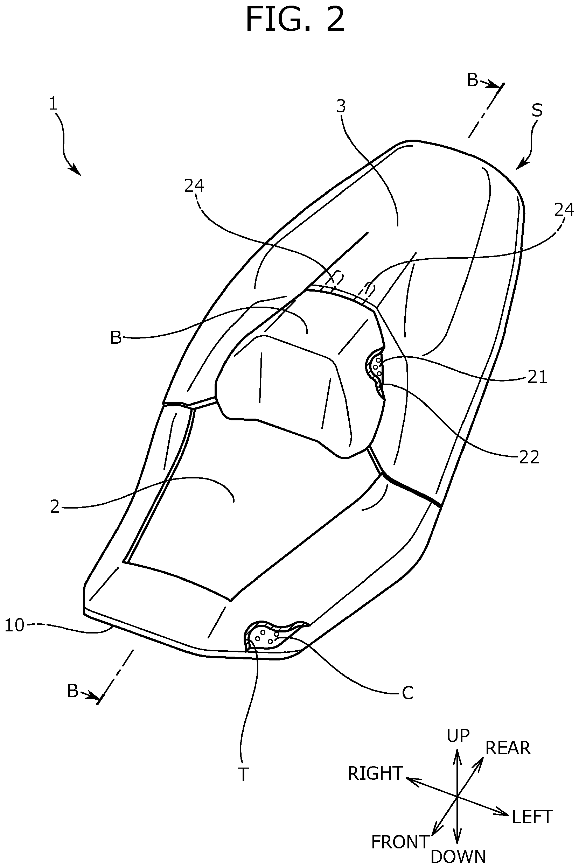

Hereinafter, a motorcycle seat 1 as a straddling -type seat according to an embodiment of the present invention (hereinafter, referred to as this embodiment) will be described with reference to FIGS. 1 to 18. The motorcycle seat 1 is a straddling-type seat on which a seated occupant (occupant, driver) sits in a straddling manner. The motorcycle seat 1 is detachably attached to a vehicle body VB of the motorcycle V and in FIG. 2, the motorcycle seat 1 removed from the vehicle body VB will be described.

In addition, the embodiment described below is merely an example for facilitating understanding of the present invention, and does not limit the present invention. That is, the shape, size, arrangement, and the like of the members described below can be changed and improved without departing from the scope of the present invention, and the present invention naturally includes equivalents thereof.

The terms indicating the directions in the present specification are defined as shown in FIGS. 1 and 2. Specifically, in the following description, the "front to rear direction" means the front to rear direction when viewed from an occupant seated on the motorcycle seat 1. The "seat width direction" coincides with the right to left direction when viewed from the seated occupant of the motorcycle seat 1. Further, the "up to down direction" coincides with the up to down direction when viewed from the seated occupant of the motorcycle seat 1.

### <Main configuration of motorcycle seat 1>

As shown in FIG. 1, the motorcycle seat 1 according to this embodiment (hereinafter, referred to as the motorcycle seat 1) is mounted on the motorcycle V by being attached to the vehicle body VB (motorcycle body). The motorcycle seat 1 includes a seat body S and a backrest B as main components.

FIG. 2 is an external view of the motorcycle seat 1 and for convenience of illustration, a portion of the seat body S is shown in a state in which a skin material T is removed and a cushion material C is exposed. Similarly, a portion of the backrest B is illustrated in a state in which a skin material 22 is removed and a cushion material 21 is exposed.

### (Seat body S)

The seat body S includes a front seating portion 2 (front seat) on which a driver sits and a rear seating portion 3 (rear seat) which is formed one step higher than the front seating portion 2 and on which another occupant sits. That is, the motorcycle seat 1 is a two-seater seat including the front seating portion 2 on the front side and the rear seating portion 3 on the rear side. The front seating portion 2 and the rear seating portion 3 are portions on which the buttocks and thighs of the occupants (that is, the seated occupants) of the motorcycle V are placed. The seat body S has a configuration in which the cushion material C is placed on a bottom plate 10 to be described later and the surface of the cushion material C is covered with the skin material T.

### (Backrest B)

The backrest B against which the driver leans is provided in a step recess between the front seating portion 2 and the rear seating portion 3. This backrest B is movable with respect to the seat body S. That is, the backrest is manually movable and adjustable in the front to rear direction.

Further, the backrest B has a configuration in which a cushion material 21 is disposed on a backrest bottom 20 facing a step portion of the bottom plate 10 and the outside of the cushion material 21 is covered with the skin material 22 and the skin material 22 is fixed to the backrest bottom 20.

The backrest B is formed in a pillow shape having a concave front surface to cover the waist of the driver. The lower surface of the backrest B is disposed on the upper surface of the rear portion of the front seating portion 2 to be movable in the front to rear direction. The upper surface of the backrest B is disposed to be continuous to the upper surface of the front portion of the rear seating portion 3.

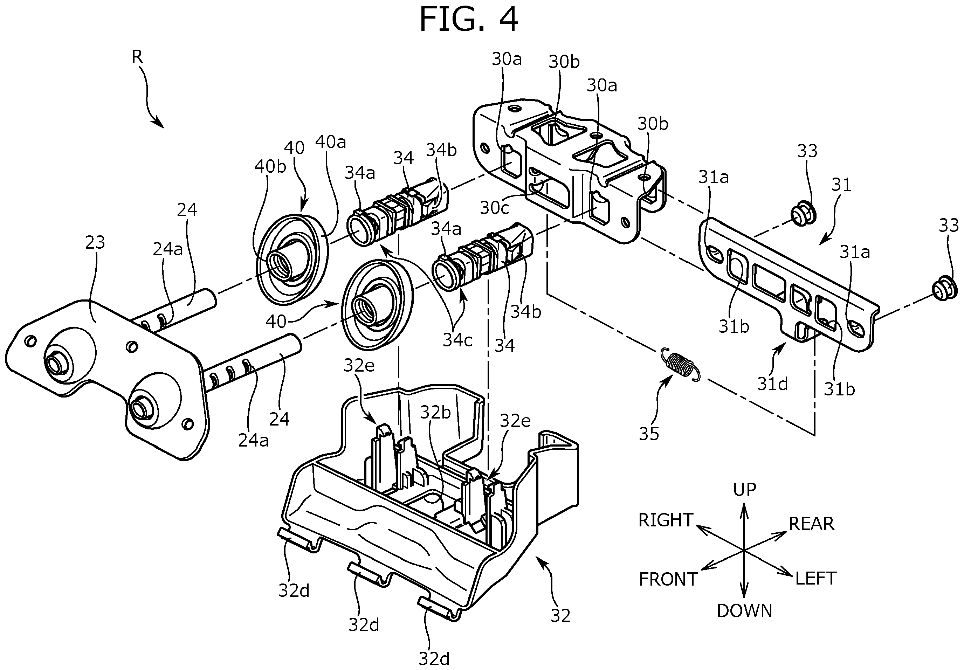

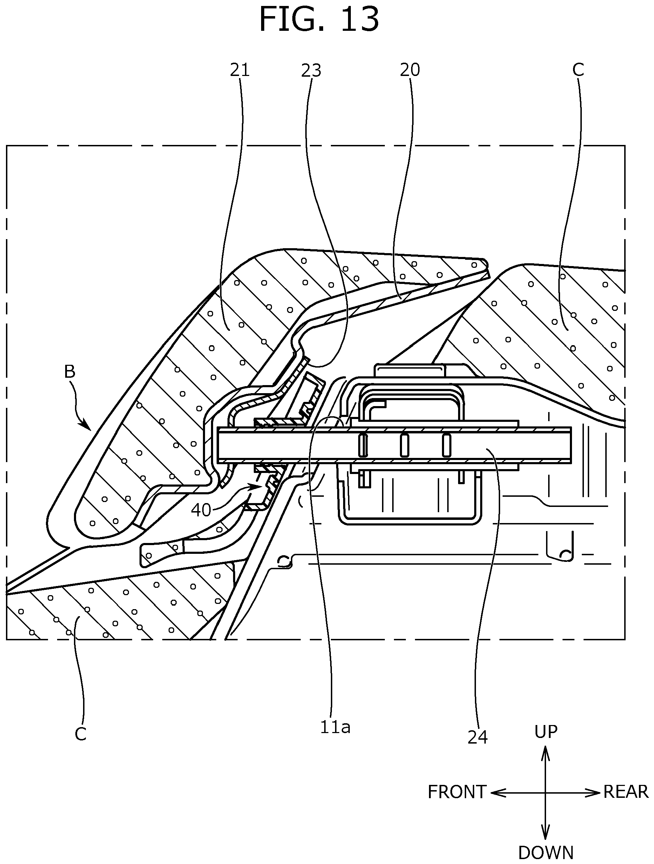

As shown in FIG. 4 and FIG. 13 described below, a plate-shaped support frame 23 which is elongated in the right to left direction is fixed to the back surface of the backrest bottom 20 of the backrest B by a plurality of bolts and nuts (not shown). Front ends of a pair of pipe frames 24 serving as attachment frames of the backrest B are welded to the right and left sides of the support frame 23.

The pair of pipe frames 24 are parallel to each other, pass through the opening portions opening to the bottom plate 10 and the skin material T of the seat body S, and are supported by a locking mechanism R to be described later to be movable in the front to rear direction. As will be described below, the backrest B is fixed by the locking operation of the locking mechanism R and can be manually moved and adjusted in the front to rear direction by the unlocking operation.

### (Bottom plate 10)

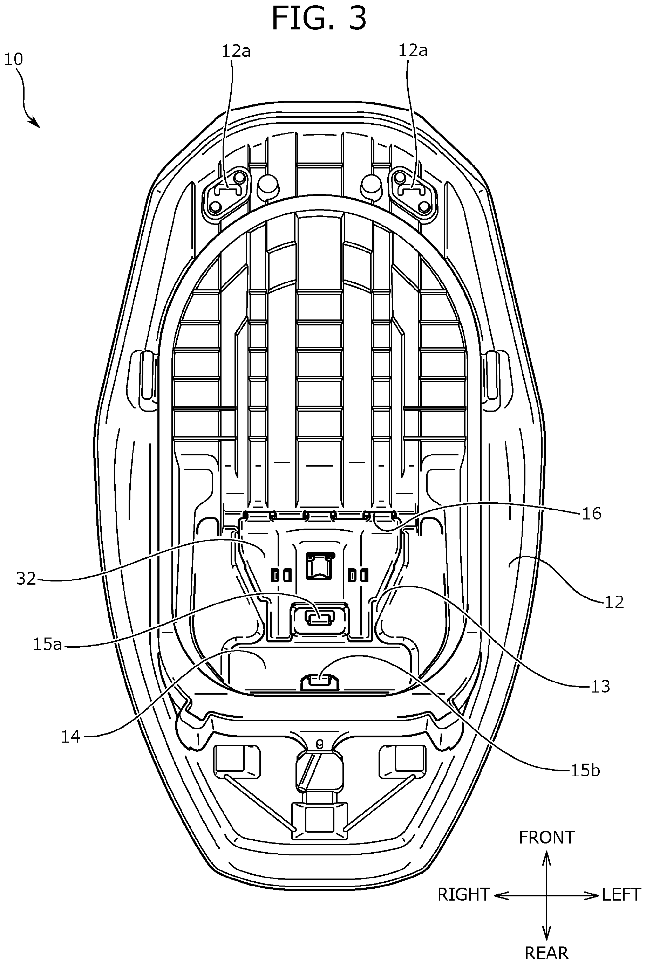

FIG. 3 is a back surface view of the motorcycle seat 1. The bottom plate 10 which is a bottom plate forming the lower surface of the motorcycle seat 1 is formed of a resin material. The bottom plate 10 includes a front surface 11 and a back surface 12 and a pair of through-holes 11a through which the pair of pipe frames 24 (adjustment members) are respectively inserted are formed between the front surface 11 and the back surface 12 of the bottom plate 10.

A storage recess 13 which stores a lock plate 31 or a lock bracket 30 of the locking mechanism R to be described later is formed at the substantially center of the back surface 12 of the bottom plate 10 in the seat width direction. The storage recess 13 is a recess which is recessed from the back surface 12 of the bottom plate 10 toward the front surface 11 (that is, upward) . A lock cover 32 to be described later is attached while the locking mechanism R is stored in the storage recess 13.

A bag storage portion 14 which extends in the seat width direction is formed on the rear side of the storage recess 13. A storage bag 50 to be described later is disposed in the bag storage portion 14. The bag storage portion 14 is a recess which is recessed from the back surface 12 of the bottom plate 10 toward the front surface 11 (that is, upward). A front locking portion 15a is formed in front of the bag storage portion 14 and a rear locking portion 15b is formed at the rear end portion of the bag storage portion 14. The front locking portion 15a is a cut-and-raised portion formed to protrude forward and the rear locking portion 15b is a cut-and-raised portion formed to protrude rearward.

Further, a plurality of engagement recesses 16 (engagement portions) which are fitted and engaged with an engagement claw 32d of the lock cover 32 are formed at the front end portion of the storage recess 13. As shown in FIG. 3, a striker 12a for attaching the motorcycle seat 1 to the vehicle body VB is provided on the back surface 12 of the bottom plate 10. The striker 12a can employ a known structure that engages with a striker engagement portion (not shown) provided on the side of the vehicle body VB.

### <Locking mechanism R>

Next, the structure of the locking mechanism R that locks the backrest B by adjusting its position with respect to the seat body S in a plurality of stages in the front to rear direction will be described with reference to FIGS. 4 to 11.

The locking mechanism R is integrally supported by the back surface 12 (lower surface) of the bottom plate 10 and includes the lock bracket 30, the lock plate 31 which is provided inside the lock bracket 30 to be slidable in the right to left direction, and the lock cover 32 which covers the lock bracket 30 and the lock plate 31.

The lock bracket 30 has a gate shape in cross-section and extends in the seat width direction and a guide tube 34 is inserted and fixed to each of an insertion hole 30a and an insertion hole 30b opened in the front and rear walls of the right and left portions thereof.

As shown in FIG. 4, an engagement piece 34a and an engagement piece 34b which engage with the insertion hole 30a and the insertion hole 30b integrally protrude from the outer peripheral surface of each guide tube 34. The pair of pipe frames 24 connected to the backrest B slidably penetrate the pair of guide tubes 34. In this embodiment, the adjustment member is the pipe frame 24 which is a pillar.

As shown in FIG. 4, a plurality of (three) arc-shaped fitting slits 24a are formed at intervals in the axial direction on the outer surface of the intermediate portion of each pipe frame 24. A passage port 34c selectively matching one of the plurality of fitting slits 24a is formed in the outer periphery of the front portion of each guide tube 34.

The lock plate 31 which is provided in the lock bracket 30 to be slidable in the right to left direction is formed in a plate shape and elongated holes 31a opening to both end portions are pin-connected to both end portions of the lock bracket 30 with a connection pin 33. The lock plate 31 is slidable in the right to left direction (the seat width direction) with respect to the lock bracket 30 in the length range of the elongated hole 31a. A pair of fitting holes 31b which can be selectively fitted into one of the plurality of fitting slits 24a of the pipe frame 24 through the passage port 34c of the guide tube 34 are opened to the right and left sides of the lock plate 31.

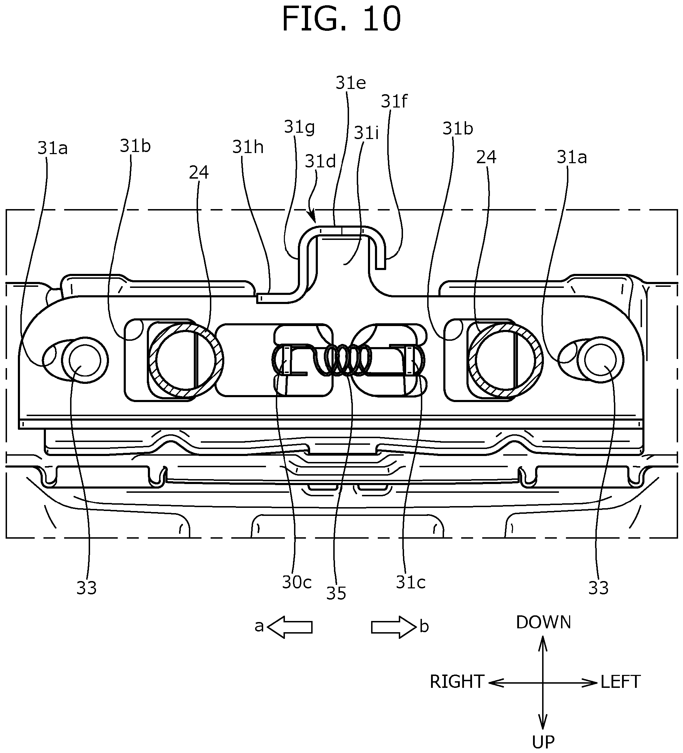

As shown in FIG. 10, a lock spring 35 made by a coil spring is stretched between the lock bracket 30 (specifically, the spring locking portion 30c) and the lock plate 31 (specifically, the spring locking portion 31c) and the lock spring 35 can lock two pipe frames 24, that is, the backrest B by urging the lock plate 31 in a locking direction (the direction of the arrow a of FIG. 10, that is, the right direction) and selectively fitting the fitting hole 31b of the lock plate 31 into one of the plurality of fitting slits 24a through the passage port 34c.

### (Lock plate 31)

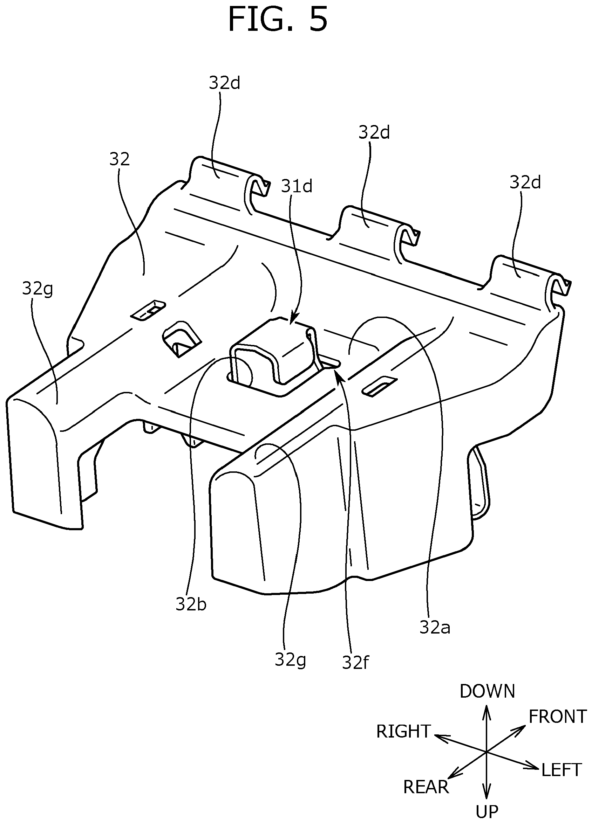

In the lock plate 31, as shown in FIGS. 5 to 10, an unlocking lever 31d which is an operation portion is integrally formed at the lower end of the plate member mainly extending in the seat width direction. The unlocking lever 31d includes a bottom portion 31e which is disposed at the lower end and a side wall 31f and a connection portion 31g which are bent upward from the bottom portion 31e. The side wall 31f and the connection portion 31g face each other in the seat width direction and the connection portion 31g is formed to be longer than the side wall 31f in the up to down direction.

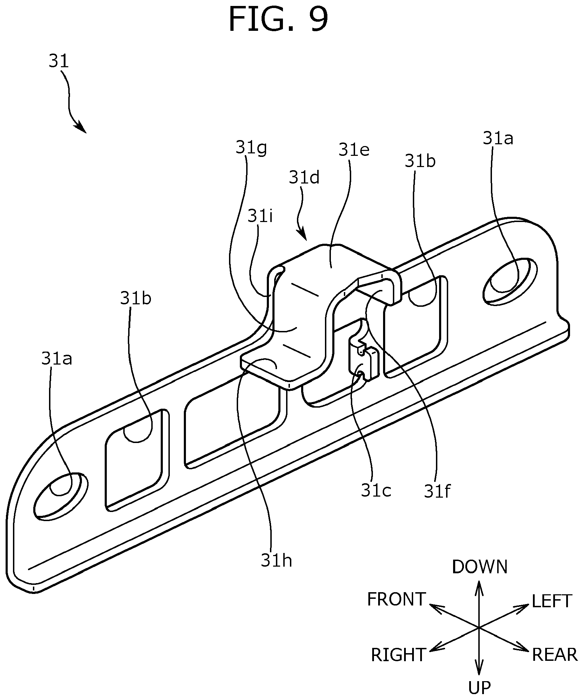

As shown in FIG. 9, the lock plate 31 includes a bent portion 31h which is bent from the connection portion 31g of the unlocking lever 31d. The bent portion 31h is a plate portion which extends outward in the seat width direction from the upper end of the connection portion 31g. As shown in FIG. 9, the unlocking lever 31d is connected to a protrusion portion 31i of the plate member. In other words, the bottom portion 31e of the unlocking lever 31d is connected from the lower end of the protrusion portion 31i protruding downward from the substantial center of the plate member extending in the seat width direction and the up to down direction.

### (Lock cover 32)

The lock cover 32 (cover member) includes a cover recess 32a which is recessed upward from below on the lower surface and an opening portion 32b which is formed in the cover recess 32a. The opening portion 32b is disposed at the center of the lock cover 32 in the seat width direction. Both side portions of the cover recess 32a in the seat width direction protrude downward from the cover recess 32a and store the pair of guide tubes 34 and the pair of pipe frames 24.

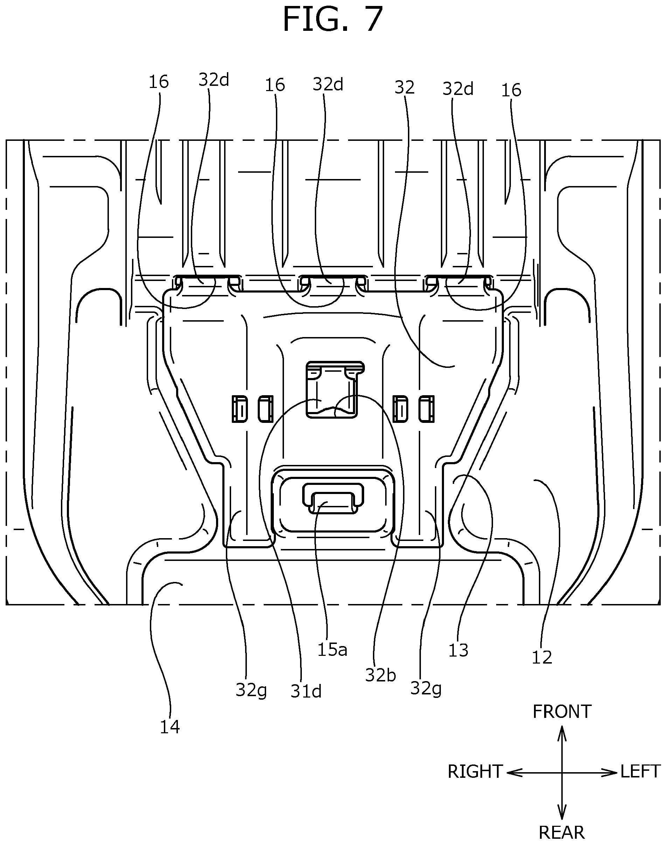

Grease is applied to the surface of the pipe frame 24 so that the pipe frame 24 slides smoothly. As shown in FIG. 7, the lock cover 32 completely covers the pipe frame 24 so that the pipe frame 24 cannot be seen when viewed from the bottom or side of the motorcycle seat 1. More specifically, the lock cover 32 is provided with a pair of extending portions 32g protruding and extending rearward in the moving direction of the pipe frame 24 (that is, the front to rear direction). The pair of extending portions 32g have a bulging shape protruding downward. The pair of extending portions 32g respectively overlap the pair of pipe frames 24 in the up to down direction. In other words, the pair of extending portions 32g are arranged to cover the pair of pipe frames 24 from below.

Since the lock cover 32 covers the locking mechanism R including the pipe frame 24, particularly, the lock cover 32 completely covers the pipe frame 24, it is possible to prevent the grease from dripping downward and adhering to the vehicle body and the like. Further, since the lock cover 32 is provided, it is possible to prevent the operator from touching the pipe frame 24 and the grease from adhering to the operator's hand. In particular, since the pair of extending portions 32g respectively overlap the pair of pipe frames 24 in the up to down direction, it is possible to appropriately cover the pipe frame 24 and to prevent the grease from dripping downward and adhering to the vehicle body or the like.

As shown in FIGS. 5 and 7, the unlocking lever 31d (operation portion) protrudes downward and outward from the opening portion 32b formed in the lock cover 32. The unlocking lever 31d protrudes toward the outside of the lock cover 32 and is provided at the center portion in the seat width direction. Here, the center portion in the seat width direction is an area between the pair of pipe frames 24, in other words, the pair of guide tubes 34 in the seat width direction.

The plurality of engagement claws 32d which are fitted and engaged with the engagement recess 16 (engaged portion) of the storage recess 13 are formed at the front end portion of the lock cover 32. The engagement claw 32d is a hook-shaped claw protruding forward and three engagement claws are arranged side by side in the seat width direction.

A pair of guide storage portions 32e are formed on the back surface (upper surface) of the lock cover 32 to sandwich the pair of guide tubes 34 therebetween. Each guide storage portion 32e is a pair of protrusion portions protruding upward from the back surface of the lock cover 32.

The opening portion 32b includes a notch 32f on the front left side (specifically, in the unlocking direction). The notch 32f has a depth capable of storing the lock plate 31 when the lock plate 31 moves in the unlocking direction.

It is preferable that the unlocking lever 31d (that is, the lock plate 31) and the lock cover 32 (cover member) are formed in different colors to easily recognize the unlocking lever 31d (operation portion).

### (Operation of unlocking lever 31d)

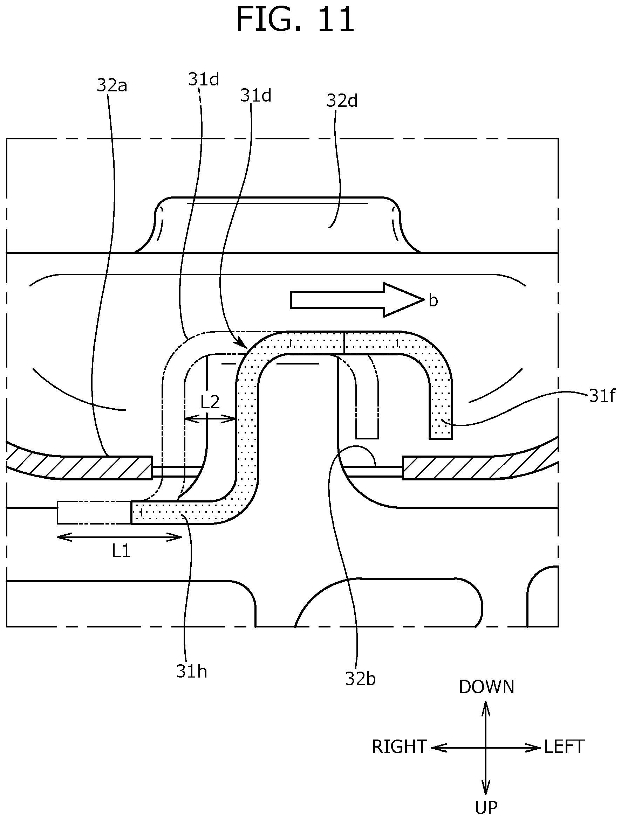

As shown in FIGS. 9 and 10, the operator operates the unlocking lever 31d provided at the lower end of the lock plate 31 so that the lock plate 31 moves in the unlocking direction (the direction of the arrow b of FIG. 11, that is, the left direction). Specifically, the operator moves the unlocking lever 31d in the unlocking direction so that the lock plate 31 moves in the unlocking direction (the direction of the arrow b of FIG. 10) against the urging force of the lock spring 35 as shown in FIG. 11. At this time, the fitting hole 31b is removed from the fitting slit 24a of the pipe frame 24 and the backrest B is movable in the front to rear direction (unlocked state).

Then, when the operator releases the pulling force on the unlocking lever 31d, the lock plate 31 moves in the locking direction (the direction of the arrow a of FIG. 10) by the urging force of the lock spring 35 to be returned to the locking position and to fix the backrest B as shown in FIG. 10 (locked state).

As described above, according to the motorcycle seat 1 of this embodiment, in the motorcycle seat 1 including the backrest B movable with respect to the seat body S, the backrest B includes the pipe frame 24 (adjustment member) which extends in the moving direction (front to rear direction) of the backrest B, the seat body S includes the bottom plate 10 through which the pipe frame 24 is inserted, the lock plate 31 (lock member) which comes into contact with the pipe frame 24 to prohibits the movement of the backrest B, and the lock cover 32 (cover member) which covers the lock plate 31, the lock plate 31 includes the unlocking lever 31d (operation portion) which is operated when moving the backrest B, and the unlocking lever 31d protrudes toward the outside of the lock cover 32 and is provided at the center portion of the seat width direction.

More specifically, the unlocking lever 31d protrudes downward and outward from the opening portion 32b formed in the cover recess 32a of the lock cover 32. According to such a configuration, since the lock plate 31 is directly moved by the unlocking lever 31d provided at the center portion of the seat width direction while improving the appearance by covering the lock plate 31 with the lock cover 32 from below, it is possible to reduce the number of parts.

Further, in the motorcycle seat 1, the lock cover 32 includes the cover recess 32a which is recessed upward, the unlocking lever 31d is disposed inside the cover recess 32a in the front to rear direction of the seat, the seat width direction, and the up to down direction of the seat, and the lowermost portion of the unlocking lever 31d, that is, the bottom portion 31e is located above the lowermost end of the area around the cover recess 32a of the lock cover 32 (FIG. 11). In other words, the bottom portion 31e is located above the base end portion (fixed end portion) of the engagement claw 32d of the lock cover 32 (FIG. 11). According to such a configuration, the unlocking lever 31d can be disposed compactly without protruding below the lowermost end of the lock cover 32.

Further, the unlocking lever 31d includes the side wall 31f which is formed at a position facing the connection portion 31g in the seat width direction to be bent from the bottom portion 31e (FIGS. 9 to 11). According to such a configuration, since it is possible to grip the connection portion 31g and the side wall 31f with fingers from the seat width direction when operating the unlocking lever 31d, it is possible to improve the operability at the time of unlocking.

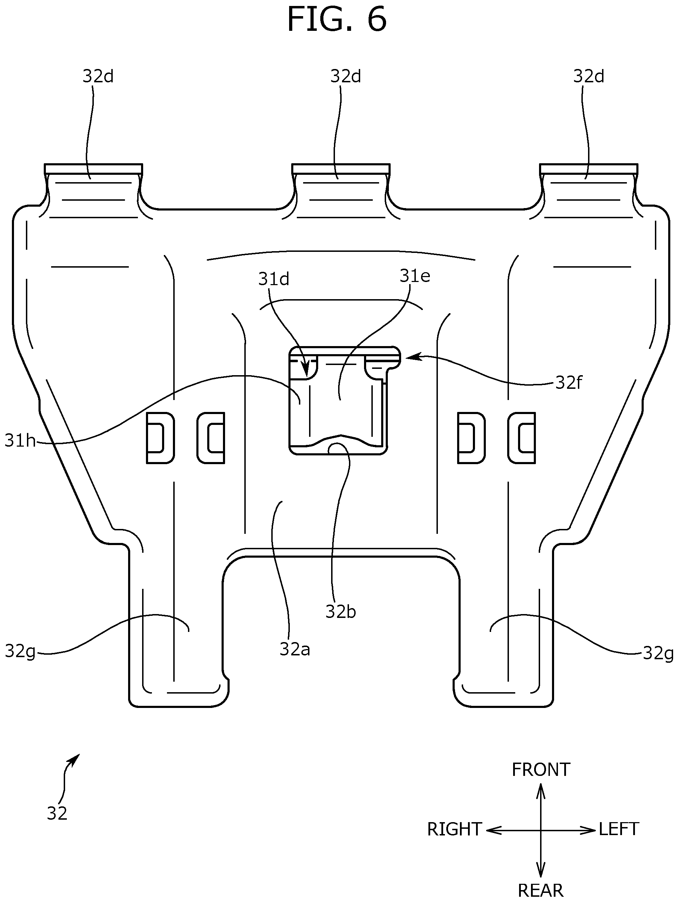

Further, the unlocking lever 31d protrudes downward and outward from the opening portion 32b formed in the lock cover 32, the lock plate 31 includes the bent portion 31h which is bent from the unlocking lever 31d, and the bent portion 31h is disposed to fill a gap between the unlocking lever 31d and the opening portion 32b when viewed from the bottom of the seat body S (that is, the motorcycle seat 1) (FIGS. 6 and 11). According to such a configuration, it is possible to prevent foreign matter from entering the locking mechanism by filling a gap between the lock plate 31 and the lock cover 32 around the opening portion 32b.

Further, in the locked state in which the movement of the backrest B is prohibited, the length L1 of the portion in which the bent portion 31h and the lock cover 32 overlap each other in the up to down direction is longer than the maximum movement amount L2 of the lock plate 31 (that is, the unlocking lever 31d) (FIG. 11). According to such a configuration, since it is possible to fill a gap between the lock plate 31 and the lock cover 32 around the opening portion 32b even in the state in which the unlocking lever 31d of the lock plate 31 is slid for unlocking (unlocked state), it is possible to suppress the entrance of foreign matter.

Further, the unlocking lever 31d includes the bottom portion 31e which extends in the seat width direction and the connection portion 31g which connects the bottom portion 31e and the bent portion 31h and the length of the bent portion 31h in the seat width direction is shorter than the length of the connection portion 31g in the up to down direction (FIGS. 9 to 11). According to such a configuration, the unlocking lever 31d can be made compact.

### (Protection member 40)

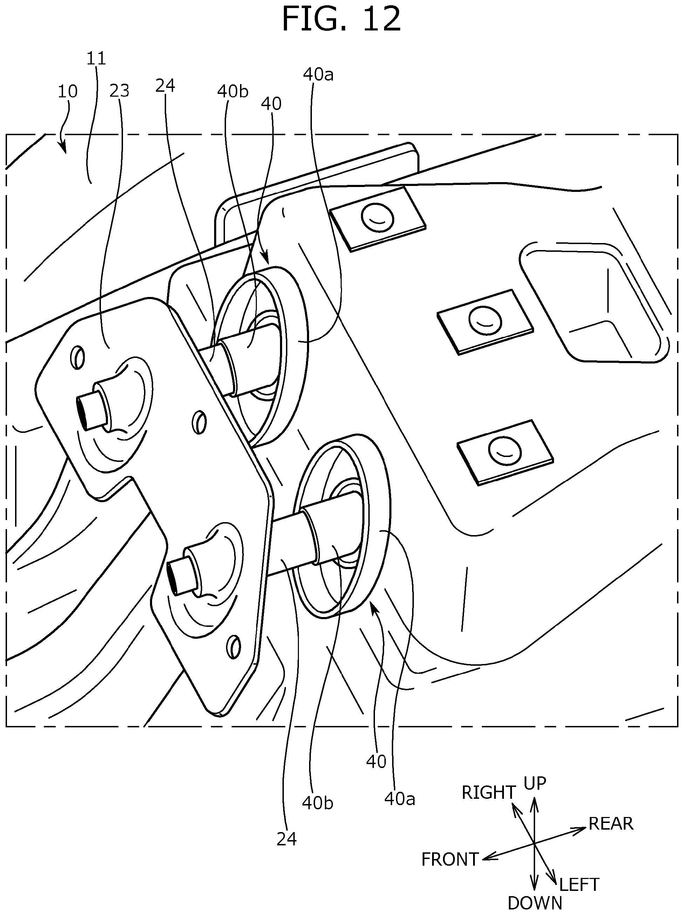

As shown in FIGS. 12 to 14, the protection member 40 is provided on the front side of the pair of through-holes 11a formed in the bottom plate 10. The protection member 40 includes a ring-shaped peripheral edge portion 40a which surrounds the outer periphery and a tubular protection portion 40b which is provided at the center portion. Additionally, the illustration of the skin material T of the seat body S and the skin material 22 of the backrest B is omitted in FIG. 13.

The protection member 40 includes the ring-shaped peripheral edge portion 40a in the periphery thereof and can guide water, flowing forward from the rear seating portion 3, from above to below along the outer periphery of the peripheral edge portion 40a when it rains. Further, according to the peripheral edge portion 40a, it is possible to suppress water from entering the surroundings of the protection portion 40b. Since the peripheral edge portion 40a is inclined so that the lower end side is located more forward than the upper end side, water flowing forward from the rear seating portion 3 is more appropriately guided from above to below when it rains.

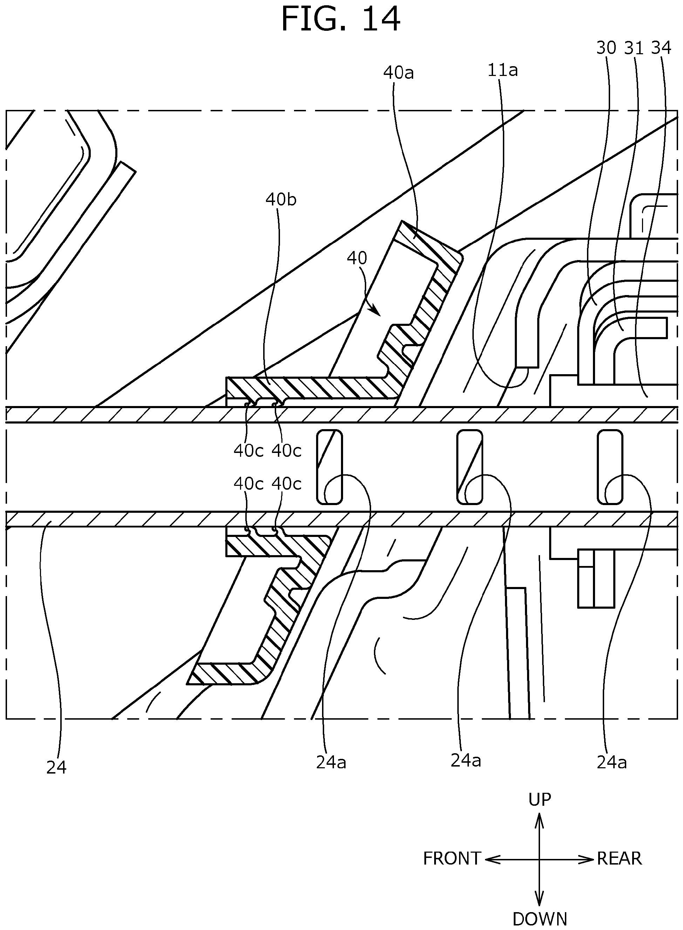

The pipe frame 24 is inserted through the protection portion 40b. The tubular protection portion 40b is formed so that the upper side is longer than the lower side. According to such a configuration, it is possible to prevent the pipe frame 24 from being wet due to the water entering the gap of the through-hole 11a when moving the backrest B. Further, it is possible to suppress water from entering the fitting portion of the pipe frame 24 and the lock plate 31 even when the pipe frame 24 is moved to the frontmost portion by lengthening the upper side of the protection portion 40b (in the state shown in FIG. 14, the frontmost fitting slit 24a is disposed inside the protection portion 40b).

Further, two waterproof ribs 40c are formed in a ring shape inside the protection portion 40b in a protruding manner. Since the protection member 40 is formed of a resin material, the waterproof rib 40c follows the movement of the pipe frame 24 even when the backrest B moves forward or rearward or a downward load is applied to the backrest B. According to such a configuration, since the gap between the inner surface of the protection portion 40b and the outer surface of the pipe frame 24 is appropriately closed, water is suppressed from entering the inside of the seat body S, that is, the back surface 12 of the bottom plate 10.

Further, in the state in which the backrest B is disposed on the frontmost side (FIG. 14), each waterproof rib 40c is disposed on the front side of the frontmost fitting slit 24a. According to such a configuration, water is suppressed from entering from the fitting slit 24a of the pipe frame 24 even when the backrest B (the pipe frame 24) is moved to the frontmost portion.

### (Storage bag 50)

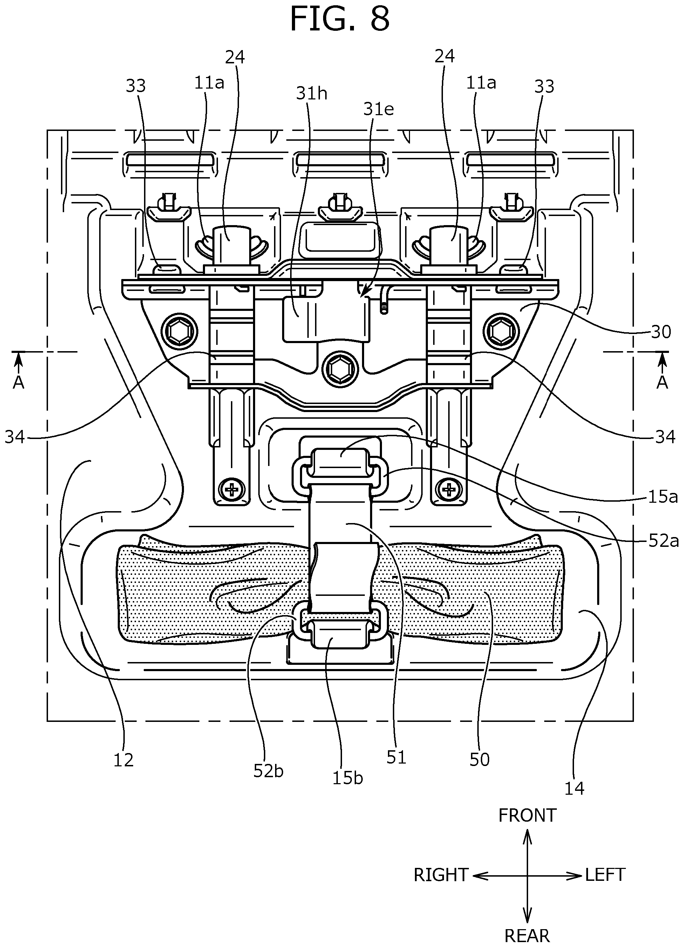

The motorcycle seat 1 of this embodiment can store articles such as tools on its back surface. As shown in FIG. 8, the storage bag 50 is a bag body that stores articles therein. The storage bag 50 is stored in the bag storage portion 14 which is a recess provided on the back surface 12 of the bottom plate 10 in a rolled state.

In the seat width direction, a front locking portion 15a which is a hook portion is disposed between the pair of pipe frames 24 (adjustment members) and a belt 51 is connected to the rear locking portion 15b serving as a rear hook portion to support the storage bag 50.

The belt 51 includes a front ring 51a at a front end portion and a rear ring 52a at a rear end portion. Since the front ring 51a is hooked on the front locking portion 15a and the rear ring 51b is hooked on the rear locking portion 15b, the storage bag 50 is supported in the bag storage portion 14 by the belt 51.

### <Modified example>

Although the configuration of the motorcycle seat 1 according to an embodiment of the present invention has been described so far, the above-described embodiment is merely an example for facilitating understanding of the present invention and is not intended to limit the present invention. That is, the present invention may be modified and improved without departing from its spirit, and the present invention includes equivalents thereof.

In particular, the structure, material, shape, and dimension of each element that constitutes the motorcycle seat 1 are not limited to those described in the above-described embodiment and can be arbitrarily designed without departing from the gist of the present invention.

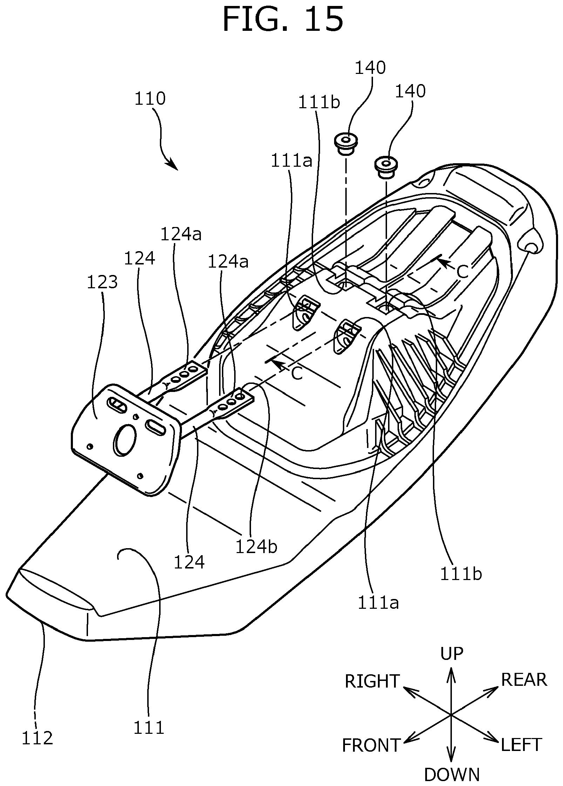

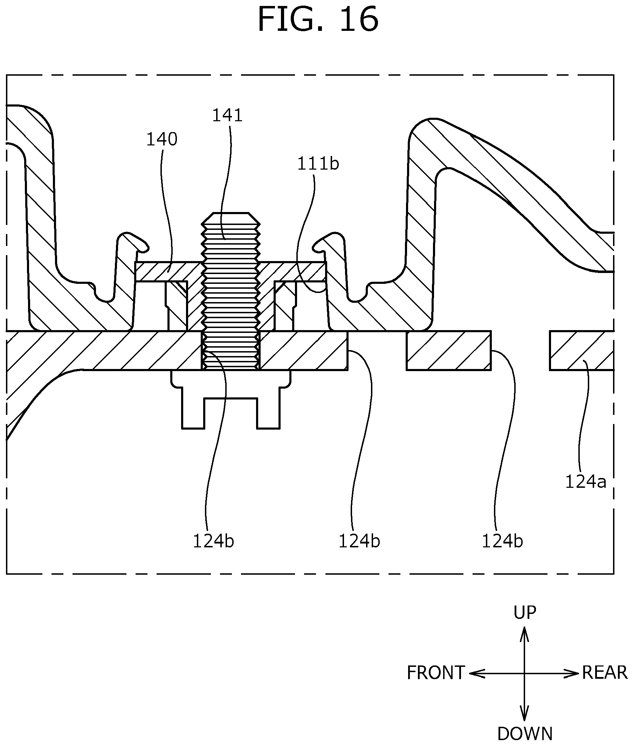

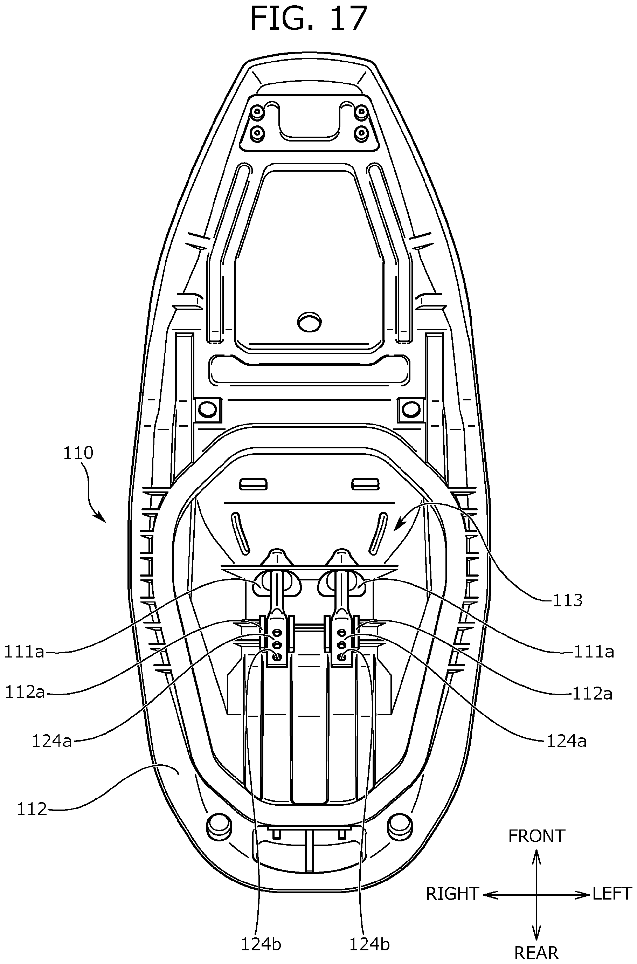

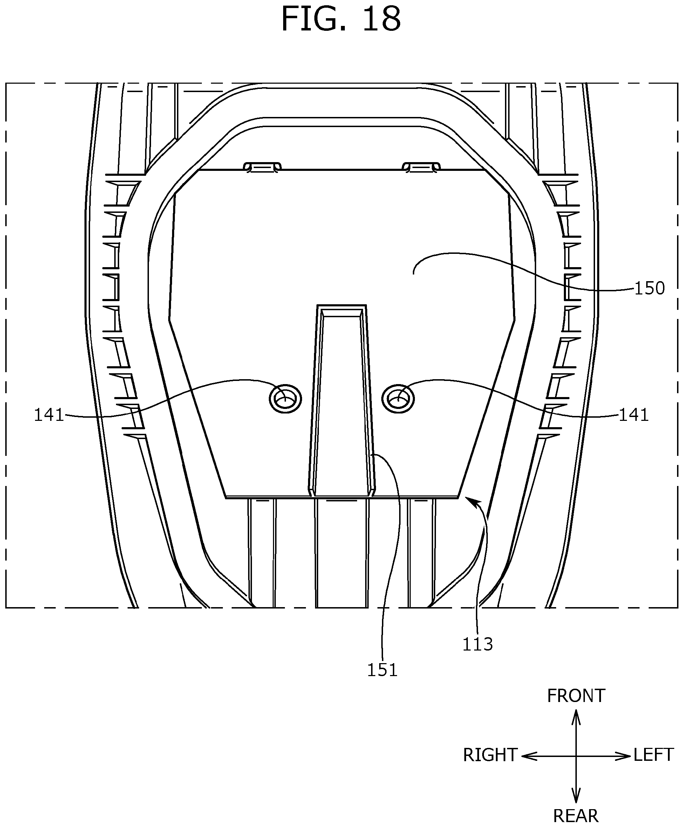

Hereinafter, a locking mechanism of a motorcycle seat according to the modified example will be described with reference to FIGS. 15 to 18. FIG. 15 is a schematic view illustrating the motorcycle seat according to the modified example, FIG. 16 is a cross-sectional view taken along a line C-C of FIG. 15, FIG. 17 is a back surface view of the motorcycle seat according to the modified example, and FIG. 18 is a diagram showing a lock cover 150 attached to a bottom plate 110 of the motorcycle seat according to the modified example. In the description below, only the difference from the above-described embodiment will be described.

A pair of through-holes 111a through which a pair of adjustment members 124 are respectively inserted are formed between a front surface 111 and a back surface 112 of the bottom plate 110. Further, a pair of nut attachment holes 111b to which nuts 140 are attached are provided on the rear side of the pair of through-holes 111a.

As shown in FIG. 15, front ends of a pair of adjustment members 124 serving as attachment frames of the backrest B are welded to the right and left sides of a support frame 123 of the backrest B. The pair of adjustment members 124 are parallel to each other, pass through the through-holes 111a opening to the bottom plate 110, and are supported by a nut 140 and a bolt 141 serving as a locking mechanism (FIGS. 16 and 17).

The pair of adjustment members 124 include plate-shaped plate portions 124a extending in the front to rear direction at the rear side. The plate portion 124a is provided with a plurality of (three) fitting holes 124b penetrating in the up to down direction (FIGS. 15 and 16).

Two adjustment members 124 are provided and two bolts 141 are also provided as the operation portions. When the operator operates the bolt 141 to be removed from the nut 140, the plate portion 124a of the adjustment member 124 is opened and the backrest B can be freely moved in the front to rear direction (unlocked state). Then, the operator fixes the backrest B by inserting the bolt 141 into the corresponding fitting hole 124b to be engaged with the nut 140 when the backrest B is at the predetermined front and rear positions (locked state).

At this time, as shown in FIG. 17, the plate portion 124a is sandwiched in the seat width direction by a sandwiching portion 112a provided on the back surface 112 of the bottom plate 110. According to such a configuration, the position is stabilized in the seat width direction when the backrest B is inserted through the through-hole 111a.

Further, a storage recess 113 which stores the plate portion 124a or the bolt 141 is formed at the substantial center of the seat width direction of the back surface 112 of the bottom plate 110. The storage recess 113 is a recess which is recessed from the back surface 112 of the bottom plate 110 toward the front surface 111 (that is, upward). The lock cover 150 is attached while the plate portion 124a or the bolt 141 (a part of the locking mechanism) is stored in the storage recess 113.

The lock cover 150 includes a rib 151 which is provided between the pair of bolts 141 as the reinforcing portion. When the operation portion is the bolt 141, the number of bolts 141 corresponding to the number of adjustment members 124 is also required and a plurality of receiving holes (not shown) for the bolts 141 are provided in the lock cover 150. As a result, it is possible to increase the strength by reinforcing the fragile portion between the receiving holes of the bolts 141 with the ribs 151.

### <Second embodiment>

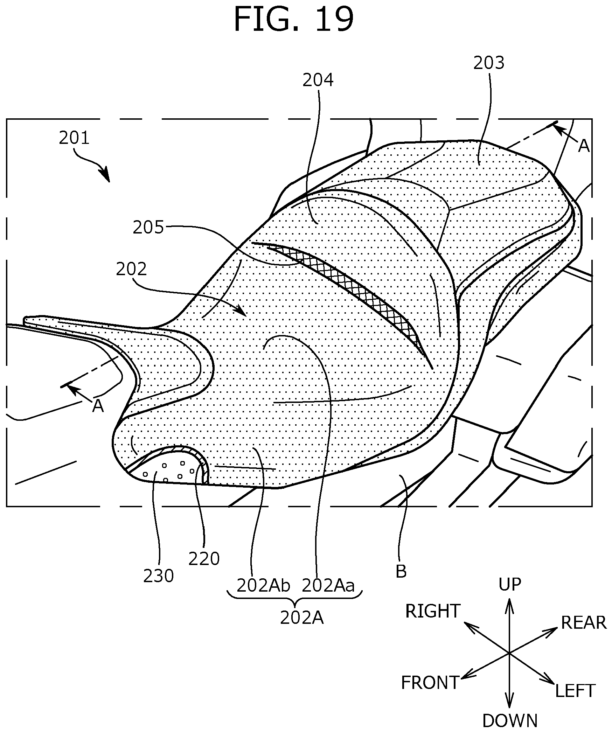

Hereinafter, a motorcycle seat 201 according to a second embodiment will be described with reference to FIGS. 19 to 31.

As a straddling-type seat device of the motorcycle, there has been proposed a device called an air cell storing a bag that can be inflated by compressing and injecting air therein.

For example, Patent Literature (JP 2019-069107 A) proposes a technique that enables a seating position of a seated occupant to be maintained in a good condition by controlling the hardness of a seating surface while controlling the flow of air so that a plurality of air cells stored in a cushion material inside the seat are inflated and deflated according to the traveling state of the motorcycle.

Accordingly, although the seating position of the seated occupant can be maintained in a good condition, it is not possible to reduce the fatigue of the seated occupant who drives the motorcycle for a long time. That is, since the buttocks and thighs of the seated occupant who continues to drive in the same posture remain in close contact with the seat in a continuously pressed state, the driver begins to feel fatigued over time.

Here, a straddling-type seat capable of reducing the fatigue of the seated occupant by promoting the blood flow of the seated occupant, a method of controlling a fluid in the straddling-type seat, and a method of manufacturing the straddling-type seat are provided.

FIG. 19 is an external view of the motorcycle seat 201 and for convenience of illustration, a portion of the motorcycle seat 1 is shown in a state in which a skin material 220 is removed and a cushion material 230 is exposed. The motorcycle seat 201 is a two-seater seat including a front seating portion 202 for the driver on the front side and a rear seating portion 203 for an occupant on the rear side.

The front seating portion 202 and the rear seating portion 203 are the portions with which the buttocks and thighs of the seated occupants (that is, the driver and the occupant) of the motorcycle V come into contact. A non-seating portion 204 on which the occupant does not sit is provided between the front seating portion 202 and the rear seating portion 203 in the motorcycle seat 201.

The skin material 220 covers the cushion material 230 and includes a seating surface 202A on which the seated occupant sits. The seating surface 202A includes a buttock support surface 202Aa which supports the buttocks of the driver and a thigh contact surface 202Ab which is sandwiched between the right and left thighs of the driver.

An air outlet 205 which sends a gas blown by a blower 217 (blowing machine) to be described later toward the driver is provided on the rear side of the front seating portion 202. More specifically, the air outlet 205 is provided at a lower portion (base end portion) of the non-seating portion 204 provided at the rear end of the front seating portion 202 at a position facing the driver's buttocks and lumbar.

According to such a configuration, it is possible to cool the driver by blowing air from behind the driver's buttocks and lumbar. That is, the driver can feel a comfortable cool feeling due to the wind received from the front and the wind received from the rear while the vehicle is traveling. Further, since the air blown from the blower 217 hits the lower side of the buttocks of the seated occupant, it is possible to effectively suppress the dampness of the buttocks (steaming of the buttocks) of the driver.

Further, the skin material 220 includes a mesh member at a position corresponding to the air outlet 205 in the motorcycle seat 201. The mesh member has a mesh shape and suppresses foreign matter from entering the motorcycle seat 1 from the outside while ensuring ventilation of the blown air.

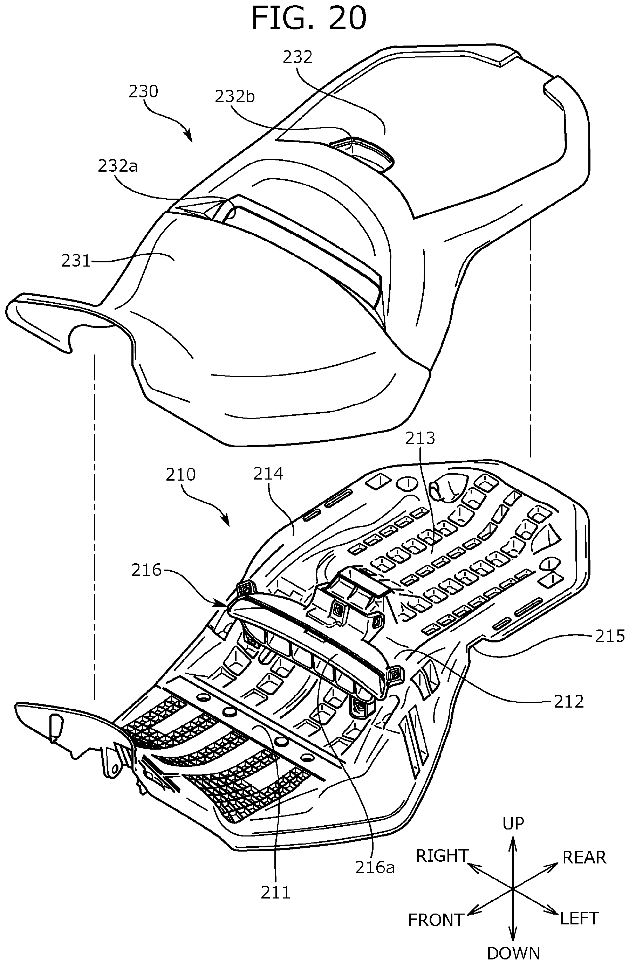

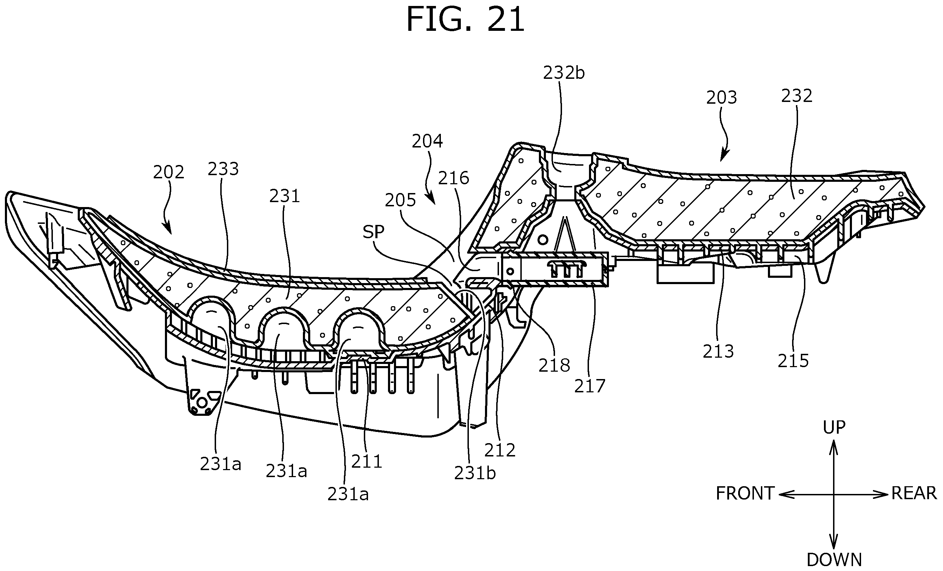

FIG. 20 is an exploded perspective view of the motorcycle seat 201 and FIG. 21 is a cross-sectional view taken along a line A-A of FIG. 19.

As shown in FIGS. 20 and 21, the motorcycle seat 201 includes a bottom plate 210, the cushion material 230, and the skin material 220 (not shown). In other words, the motorcycle seat 201 includes the cushion material 230 which is placed on the bottom plate 210 and the skin material 220 which covers the cushion material 230 and includes the seating surface 202A.

The bottom plate 210 that constitutes the lower surface of the motorcycle seat 201 and corresponds to a base material is formed of a resin material and includes a front portion 211 corresponding to the front seating portion 202, an inclined portion 212 corresponding to the non-seating portion 204, and a rear portion 213 corresponding to the rear seating portion 203 in order from the front side.

The bottom plate 210 includes a front surface 214 and a back surface 215 and the cushion material 230 is placed on the front surface 214. The blower 217 is attached to the back surface 215 (see FIG. 21). The blower 217 is connected to a duct member 216 through a blower opening portion 218 and a gas blown by the blower 217 passes through the duct member 216. Then, an opening portion 216a of the duct member 216 is disposed at a position corresponding to the air outlet 205 described with reference to FIG. 19.

The cushion material 230 is a urethane pad and is a cushioning material that has elasticity and buffers the pressure applied to the seating surface 202A. The cushion material 230 is divided into two parts, that is, a front pad 231 corresponding to the front seating portion 202 and a rear pad 232 corresponding to the non-seating portion 204 and the rear seating portion 203 in order from the front side.

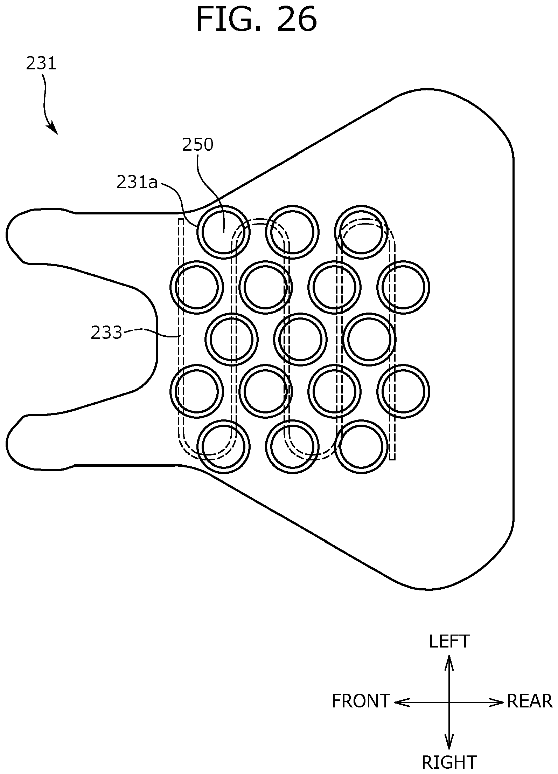

As shown in FIG. 21, the upper surface of the front pad 231 is covered with a planar heating element 233. That is, the planar heating element 233 is disposed between the cushion material 230 (front pad 231) and the skin material 220 and can heat the driver's buttocks and thighs. The planar heating element 233 will be described below with reference to FIG. 26.

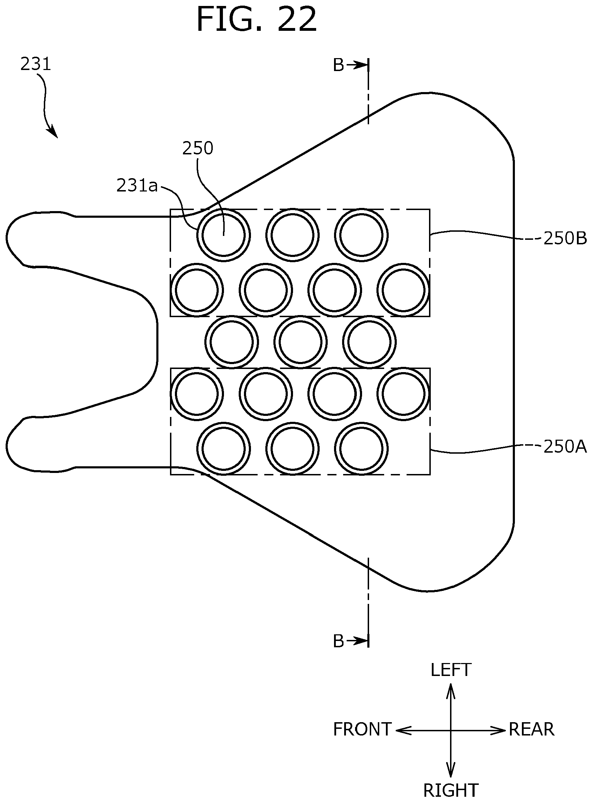

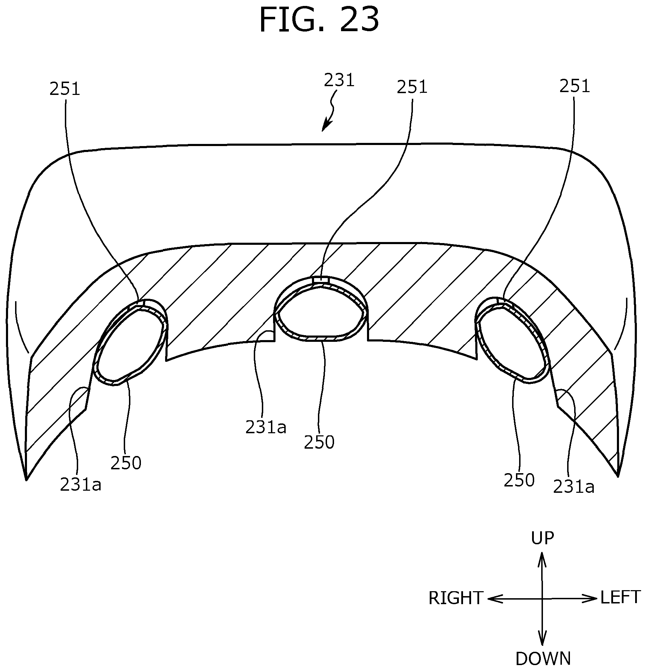

The front pad 231 includes a storage recess 231a for storing a plurality of air cells 250 therein as will be described later with reference to FIGS. 22 and 23. A pad inclined portion 231b which is inclined downward as it goes rearward in the seat width direction is formed at the rear end of the front pad 231.

Returning to FIG. 20, the rear pad 232 includes a notch portion 232a which is provided to correspond to the air outlet 205. The notch portion 232a extends in the seat width direction and an opening corresponding to the air outlet 5 is formed by combining the rear pad 232 with the front pad 231. Further, the rear pad 232 includes an opening hole 232b at an upper position corresponding to the air intake of the blower 217.

### <Air cell 250>

FIG. 22 is a diagram showing the front pad 231 from below and is a diagram showing the arrangement of the air cell 250.

As shown in FIG. 22, seventeen storage recesses 231a for storing the air cells 250 are formed in a predetermined regular arrangement on the back side of the front pad 231 constituting the front seating portion 202. Each storage recess 231a stores one air cell 250.

Hereinafter, the storage recess 231a and the air cell 250 will be described in detail.

Seventeen storage recesses 231a are regularly arranged at equal intervals at a position corresponding to the back side of the seating surface 202A of the front pad 231. As shown in FIG. 22, the storage recesses 231a are formed in five rows in the width direction. Then, three storage recesses 231a are arranged side by side in the front to rear direction in the center row of the width direction. Then, four storage recesses 231a are arranged side by side in the front to rear direction in each of the right and left rows adjacent to the center row. Then, three storage recesses 231a are arranged side by side in the front to rear direction in each of the outermost rows in the width direction.

The positions of three storage recesses 231a arranged in the center row of the width direction and the positions of four storage recesses 231a arranged in the right and left adjacent rows in the front to rear direction are alternately offset to differ from each other by equal distances. Similarly, three storage recesses 231a arranged in the outermost row of the width direction and four storage recesses 231a arranged in the inner adjacent row are alternately offset to differ from each other by equal distances in the front to rear direction.

One air cell 250 is disposed in each storage recess 231a. The air cell 250 is formed of a stretchable material, for example, a synthetic resin such as polyethylene or polyurethane and is a bag capable of storing a fluid. That is, the air cell 250 is inflated by injecting compressed air or deflated by discharging the injected air in the front to rear direction.

FIG. 23 is a cross-sectional view taken along a line B-B of FIG. 22.

As shown in FIG. 23, the air cell 250 is stored from below in each storage recess 231a formed on the back side of the front pad 231. Then, the upper wall surface of the storage recess 231a is located below the upper end surface of the cushion material 230. That is, a layer of a urethane pad forming the front pad 231 is present above each storage recess 231a.

When the seated occupant sits on the seating surface 2A, the pressure (body pressure and seat pressure) applied to the seating surface 2A is buffered by the urethane pad. At this time, when compressed air is injected into the air cell 250, the air cell 250 is inflated and the upper end of the air cell 250 presses the upper end surface of the storage recess 231a from below as shown in FIG. 23. Then, the urethane pad presses and stimulates the buttocks and thighs of the seated occupant from the inside of the motorcycle seat 1 while buffering the pressure applied from below by the inflation of the air cell 250. Specifically, the gluteal, biceps femoris, or adductor muscles of the seated occupant are stimulated. As will be described later, the flow of compressed air is controlled so that the adjacent air cells 250 are inflated and deflated (inflate and deflate) in a predetermined order. Accordingly, since the blood flow of the seated occupant is promoted by the so-called massage effect, it is possible to reduce the fatigue of the seated occupant.

As shown in FIG. 23, a plurality of pressure sensors 251 corresponding to each air cell 250 are arranged at the upper end of each air cell 250. The pressure sensor 251 can detect the pressure applied to the seating surface 202A at a position corresponding to each air cell 250. As will be described later, the pressure sensor 251 is used to determine whether or not the seated occupant is in contact with the motorcycle seat 1 at the position where the pressure sensor 251 is disposed.

Additionally, the pressure sensor 251 may be disposed between the upper surface of the front pad 231 and the skin material 220 instead of the upper end of the air cell 250. Accordingly, it is possible to more accurately detect the pressure applied to the seating surface 202A.

Returning to FIG. 22, seventeen air cells 250 which are stored in the front pad 231 inside the seating surface 202A include seven right air cell groups 250A arranged on the right side when viewed from the seated occupant and seven left air cell groups 250B which are arranged on the left side when viewed from the seated occupant. The right air cell group 250A and the left air cell group 250B are arranged symmetrically with respect to the center of the width direction of the motorcycle seat 1 as a central axis.

Then, the right air cell group 250A presses and stimulates the right buttock and right thigh of the seated occupant and the left air cell group 250B presses and stimulates the left buttock and left thigh of the seated occupant. Accordingly, it is possible to reduce the fatigue of both the right and left lower bodies of the seated occupant.

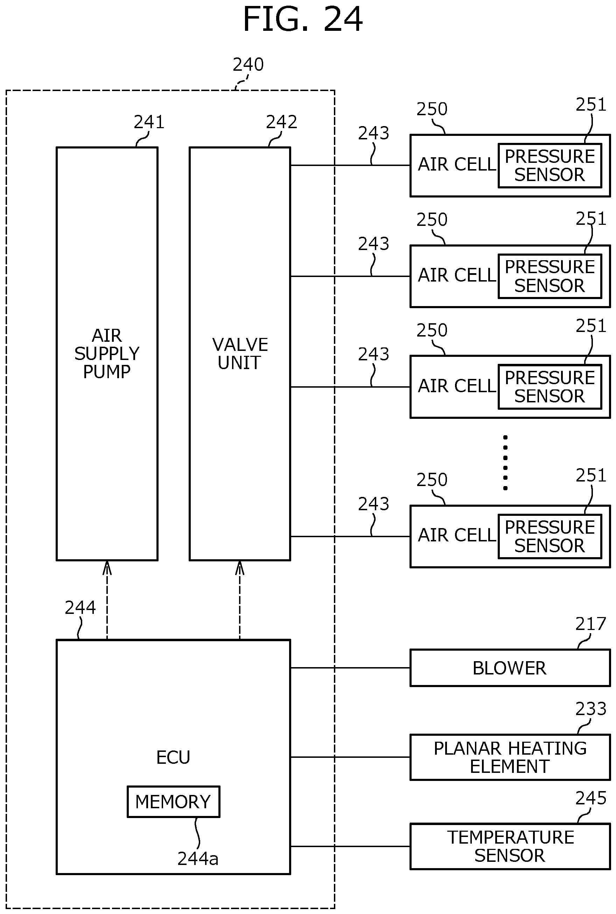

FIG. 24 is a block diagram showing a configuration of a fluid supply device 240 and the air cell 250 incorporated in the motorcycle seat 1. The fluid supply device 240 includes an air supply pump 241 which generates compressed air, a valve unit 242, and an ECU (Electronic Control Unit) 244 controlling the entire fluid supply device 240 as main components. That is, the ECU 244 (control unit) controls the flow of compressed air through the air supply pump 241 and the valve unit 242 to perform a fatigue reduction process to be described later. Further, the fluid supply device 240 includes a tube 243 which supplies compressed air from the air supply pump 241 to the air cell 250 through the valve unit 242.

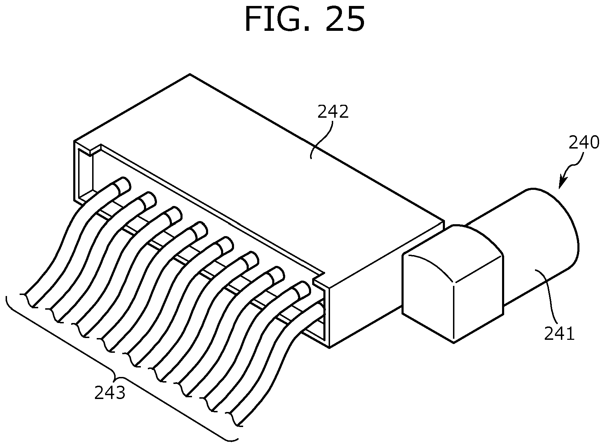

FIG. 25 is an external view of the fluid supply device 240.

The air supply pump 241 is configured as a small air pump that generates compressed air. The valve unit 242 includes a plurality of compressed air discharge ports and can switch the supply destination of the compressed air generated by the air supply pump 241. Specifically, the valve unit 242 includes an electromagnetic valve (not shown) therein and switches the discharge port from which compressed air is actually discharged among the plurality of discharge ports by controlling the electromagnetic valve.

The tube 243 is connected to each discharge port. Each tube 243 constitutes a compressed air supply path. Further, each tube 243 is connected to a compressed air injection port of the air cell 250. Thus, when the discharge port for actually discharging compressed air is switched in the valve unit 242, the compressed air supply destination (that is, the air cell 250 to which compressed air is sent) is switched. One or two air cells 250 are connected to the end of each tube 243.

Returning to FIG. 24, the ECU 244 has a function of blowing control for the above-described blower 217 and heating control for the planar heating element 233 in addition to the fluid supply device 240. That is, the ECU 244 performs heating control of the planar heating element 233 based on the outside air temperature measured by the temperature sensor 245.

The temperature sensor 245 is composed of a thermistor or a resistance temperature detector and is attached inside the skin material 220 to measure the outside air temperature. The temperature sensor 245 is attached to, for example, the front end or rear end of the motorcycle seat 201 at a position away from the seating surface 202A in order to accurately measure the outside air temperature without the influence of the body temperature of the seated occupant.

The ECU 244 performs the heating control of the planar heating element 233 when the outside air temperature is lower than a predetermined temperature. Since the heating control of the planar heating element 233 is performed when the outside air temperature is low, it is possible to provide a comfortable driving environment to the seated occupant and to promote the blood flow in the buttocks and thighs of the seated occupant. As a result, it is possible to reduce the fatigue of the seated occupant.

FIG. 26 is a diagram showing the front pad 231 from below and shows the arrangement of the air cell 250 and the planar heating element 233.

As shown in FIG. 26, the planar heating element 233 is composed of a conductive wire (resistive heating element) that is connected to a pair of electrodes, meanders while changing its orientation in the right to left direction, and covers the entire seating surface 202A in a planar manner. That is, the planar heating element 233 is disposed between the skin material 220 and the cushion material 230 and heats the buttocks and inner thighs of the seated occupant. Accordingly, it is possible to reduce the fatigue of the seated occupant by promoting the blood flow of the buttocks and thighs of the seated occupant.

Here, the conductor pattern and electrode arrangement of the planar heating element 233 are not limited to the example shown in FIG. 26. For example, a pair of electrode lines (bus bars) extending in the front to rear direction may be arranged at both ends of the cushion material 230 in the width direction, and conductive wires having a lattice pattern may be arranged in a planar shape between the electrodes. Accordingly, since it is possible to evenly and uniformly heat the seating surface 202A and to heat the seated occupant by the conductive wire at a position different from the wire breakage position even when a wire breakage occurs in a part of the conductor pattern, it is possible to enhance the durability of the planar heating element 233.

### <Fatigue reduction process>

Next, the fatigue reduction process which is performed by the ECU 244 will be described in more detail.

The ECU 244 controls the flow of compressed air injected into the air cell 250 in order to stimulate the gluteal, biceps femoris, and adductor muscles of the seated occupant and promote blood flow in the buttocks and thighs of the seated occupant. Specifically, the ECU 244 controls the flow of compressed air so that the plurality of adjacent air cells 250 are inflated and deflated in a predetermined order.

First, the position and order of the air cells 250 controlled to be inflated and deflated (hereinafter, referred to as the inflation and deflation pattern) will be described.

As described above, the air cell 250 includes the right air cell group 250A and the left air cell group 250B and the right air cell group 250A and the left air cell group 250B are arranged at symmetrical positions with respect to the center in the width direction. Hereinafter, the position and order that the air cell 250 is inflated and deflated for the right air cell group 250A will be described, but the same applies to the left air cell group 250B.

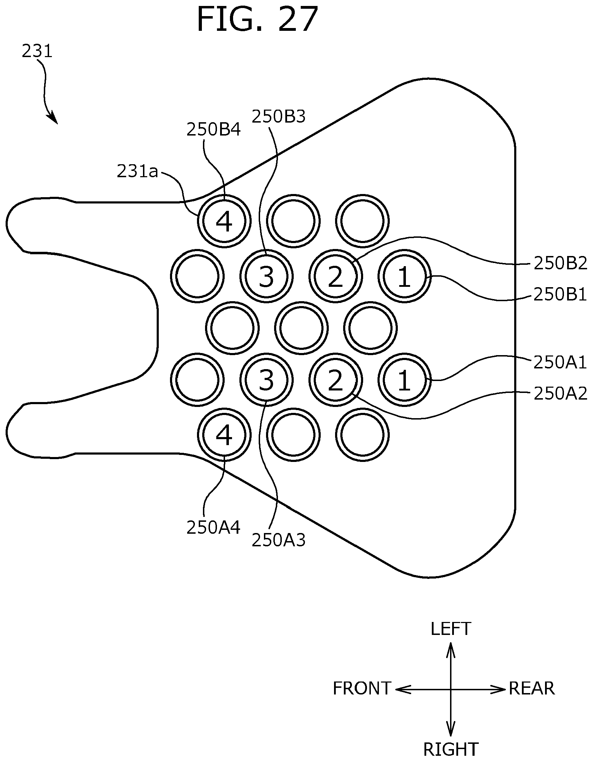

FIG. 27 is a diagram showing the inflation and deflation pattern.

As shown in FIG. 27, the air cell 250 (hereinafter, referred to as the air cell 250A1) disposed on the rearmost side in the row near the center in the width direction, that is, the air cell 250A1 disposed at a position corresponding to the rear side of the seat under the buttocks of the seated occupant among seven right air cell groups 250A is inflated firstly. Next, the air cell 250A1 is deflated and the air cell 250 (referred to as the air cell 50A2) disposed at a second position from the rear side in the row near the center, that is, the air cell 250A2 disposed at a position corresponding to the front side of the buttocks of the seated occupant is inflated secondly. Next, the air cell 250A2 is deflated and the air cell 250 (referred to as the air cell 250A3) disposed at a third position from the rear side (a second position from the front side) in the row near the center, that is, the air cell 250A3 disposed at a position corresponding to a hip joint side on the back side of the thighs of the seated occupant is inflated thirdly. The air cell 250A3 is deflated and the air cell 250 (referred to as the air cell 250A4) located on the frontmost side in the outer row of the width direction, that is, the air cell 250A4 disposed at a position corresponding to the inside of the thighs of the seated occupant is inflated fourthly.

At the following fifth, sixth, seventh, and eighth timings, the air cell 250 is controlled in the opposite order from first to fourth timings. That is, the air cell 250A4 is deflated from the inflation state of the air cell 250A4 and the air cell 250A3 is inflated. Next, the air cell 250A3 is deflated and the air cell 250A2 is inflated. Then, the air cell 250A2 is deflated and the air cell 250A1 is inflated. Finally, the air cell 250A1 is deflated and a series of the inflation and deflation control of the inflation and deflation patterns shown in FIG. 27 end.

The ECU 244 repeats the above-described inflation and deflation pattern at a predetermined time interval.

Accordingly, the gluteal, biceps femoris, and adductor muscles of the seated occupant are stimulated from the inside of the motorcycle seat 1. Then, since the so-called massage effect promotes the blood flow in the buttocks and thighs of the seated occupant, it is possible to reduce the fatigue of the seated occupant.

Additionally, the inflation and deflation pattern of the air cell 250 controlled by the ECU 244 is not limited to that shown in FIG. 27. A memory 244a (see FIG. 24) built in the ECU 244 can store a plurality of operation modes and can store a different inflation and deflation pattern associated with each operation mode.

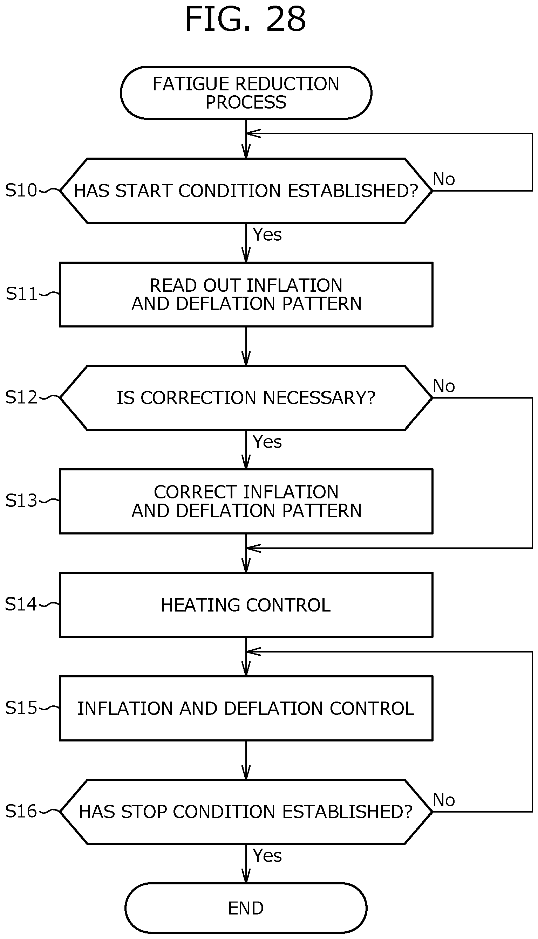

FIG. 28 shows a flow of the fatigue reduction process performed by the ECU 244.

As shown in FIG. 28, the ECU 244 first determines whether or not the conditions for starting the fatigue reduction process are met (step S10). The condition for starting the fatigue reduction process is, for example, that the motorcycle V has started traveling. Further, the condition that a predetermined time (for example, one hour) has elapsed since the start of traveling may be set as the condition for starting the fatigue reduction process or the condition that there is an operation input for starting the fatigue reduction process by the driver may be set as the condition for starting the fatigue reduction process. Then, the biological information of the seated occupant may be detected based on the detection result of the above-described pressure sensor 251, the fatigue of the seated occupant may be estimated based on the biological information, and this result may be set as the condition for starting the fatigue reduction process.

When it is determined that the condition for starting the fatigue reduction process is not satisfied (step S10: No), the process waits until the condition for starting the fatigue reduction process is satisfied.

When it is determined that the starting condition is satisfied (step S10: Yes), the ECU 244 reads out the inflation and deflation pattern from the memory 244a (step S11). The inflation and deflation pattern is, as described above, information that can identify the position and order of the air cells 250 that are inflated and deflated. The inflation and deflation pattern may include information that can identify the timing of inflation and deflation in addition to the position and order. Further, the inflation and deflation pattern may include information that can identify the inflation and deflation amount and the deflation amount.

As described above, the memory 244a stores a plurality of inflation and deflation patterns in advance and the driver can select and read out a desired inflation and deflation pattern from the memory 244a.

Next, the ECU 244 determines whether or not the inflation and deflation pattern read from step S11 needs to be corrected (step S12). Specifically, the ECU 244 determines whether or not the body pressure and seat pressure of the seated occupant are detected for the air cell 250 stored in the inflation and deflation pattern based on the pressure signal detected by the pressure sensor 251. Accordingly, the ECU determines whether or not there is the air cell 250 corresponding to the position in which the seated occupant is not in contact with the motorcycle seat 201 in the air cells 250 stored in the inflation and deflation pattern. Then, when it is determined that there is the air cell 250 corresponding to the position in which the seated occupant is not in contact with the motorcycle seat 201, it is determined that the inflation and deflation pattern needs to be corrected. In contrast, when it is determined that there is no air cell 250 corresponding to the position in which the seated occupant is not in contact with the motorcycle seat 201, it is determined that the inflation and deflation pattern does not need to be corrected.

When it is determined that the inflation and deflation pattern needs to be corrected (step S12: Yes), the ECU 244 corrects the inflation and deflation pattern (step S13). That is, the air cell 250 located at the position in which the seated occupant is not in contact with the motorcycle seat 201 is excluded from the inflation and deflation control target.

In this way, the ECU 244 sets only the air cell 250 corresponding to the pressure sensor 251 detecting the pressure applied to the seating surface 202A as the inflation and deflation control target. Accordingly, it is possible to appropriately inflate and deflate only the air cell 250 which needs to be inflated and deflated according to the body shape of the seated occupant.

When it is determined that the inflation and deflation pattern does not need to be corrected (step S12: No) or when the inflation and deflation pattern is corrected in step S13, the heating of the planar heating element 233 is controlled (step S14) and the inflating and deflating of the air cell 250 is controlled (step S15). Since the inflation and deflation control of the air cell 250 has been described with reference to FIG. 27, detailed description is omitted.

Next, the ECU 244 determines whether or not the condition for stopping the fatigue reduction process is satisfied (step S16). The condition for stopping the fatigue reduction process is, for example, when the seated occupant leaves the motorcycle seat 201. The ECU 244 determines that the seated occupant leaves the motorcycle seat 201 as a condition that all pressure sensors 251 do not detect the body pressure or seat pressure. Further, the condition that the motorcycle V stops traveling may be the condition for stopping the fatigue reduction process. Then, the condition that the driver inputs an operation input for stopping the fatigue reduction process may be the condition for stopping the fatigue reduction process.

When it is determined that the condition for stopping the fatigue reduction process is not satisfied (step S16: No), the ECU 244 returns to step S15 to continue the fatigue reduction process. On the other hand, when it is determined that the condition for stopping the fatigue reduction process is satisfied (step S16: Yes), the ECU 244 ends the fatigue reduction process.

### <Method of manufacturing seat for two-wheeled vehicle according to this embodiment>

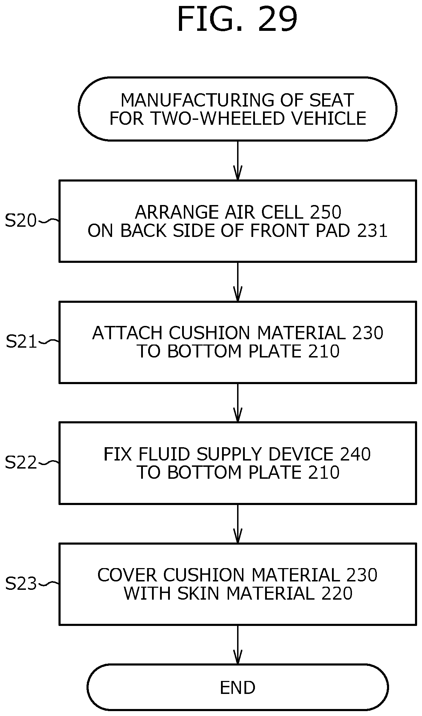

Next, a method of manufacturing the above-described motorcycle seat 201 will be described with reference to FIG. 29.

FIG. 29 is a diagram showing a flow of a manufacturing procedure of the motorcycle seat 201. Specifically, the air cell 250 is first disposed on the back side of the front pad 231 constituting the cushion material 230. That is, each of seventeen storage recesses 231a formed on the back side of the front pad 231 stores one air cell 250 capable of storing compressed air (bag arrangement step) (step S20).

Next, the cushion material 230 is attached to the bottom plate 210 (cushion material attachment step) (step S21). That is, the front pad 231 and the rear pad 232 storing the air cell 250 in step S20 are attached to the bottom plate 10. Further, at this time, the planar heating element 233 is disposed on the upper surface of the cushion material 230.

Next, the fluid supply device 240 is disposed on the bottom plate 210 (control unit arrangement step) (step S22). The fluid supply device 240 may be fixed to the back surface 15 of the bottom plate 210 or may be fixed to the front surface 214 of the bottom plate 210 (between the bottom plate 210 and the cushion material 230). As described with reference to FIG. 24, the fluid supply device 240 includes the ECU 244 which controls the flow of compressed air so that the plurality of air cells 250 located at adjacent positions are inflated in a predetermined order.

Finally, the cushion material 230 disposed on the bottom plate 210 is covered with the skin material 220 (skin material covering step) (step S23).

Through the procedures described above, the motorcycle seat 201 according to this embodiment is finally completed.

### <First modified example>

Although the configuration of the motorcycle seat 201 according to an embodiment of the present invention has been described above, the above-described embodiments are merely examples for facilitating understanding of the present invention and do not limit the present invention. That is, the present invention may be modified and improved without departing from its spirit, and the present invention includes equivalents thereof.

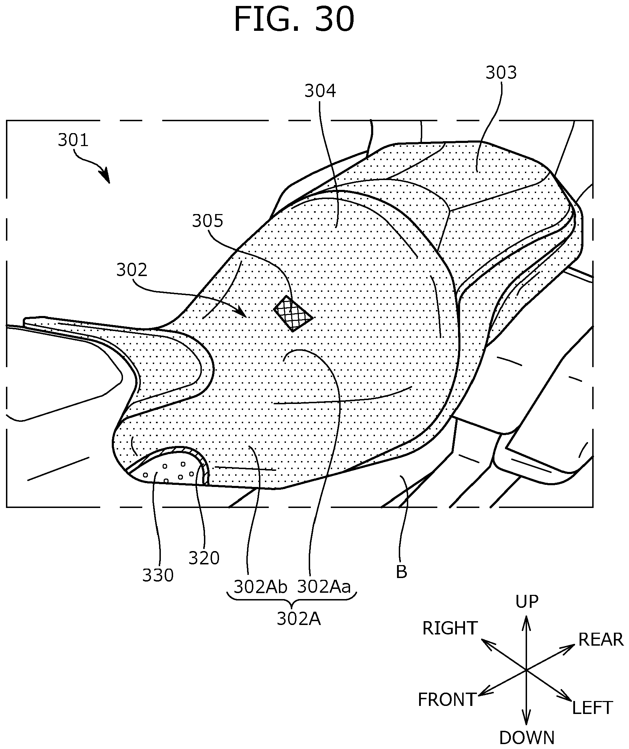

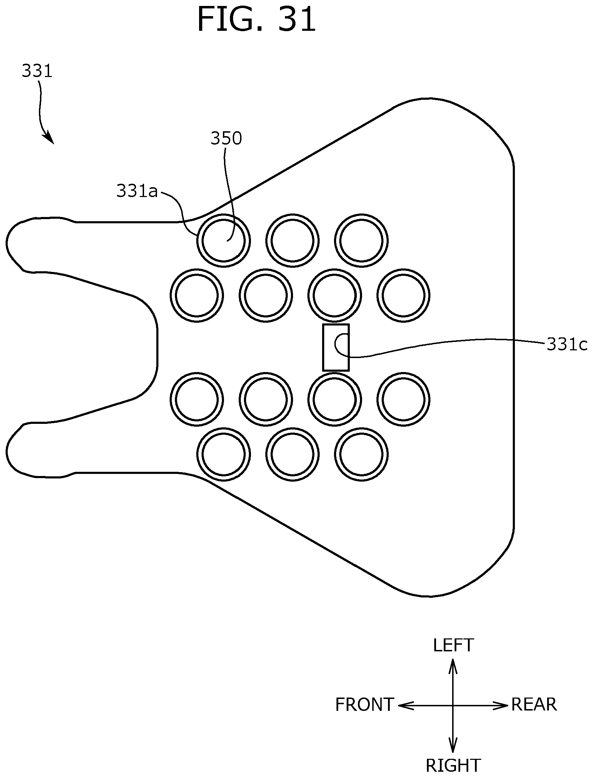

The blowing function according to the first modified example will be described with reference to FIGS. 30 and 31. In the above-described embodiments, a gas blown by the blower 217 is sent from an air outlet 305 provided on the rear side of the seating surface 202A toward the seated occupant to suppress an increase in temperature of the surfaces of the seated occupant's buttocks and lumbar. On the other hand, in the first modified example, a gas blown by a blower 317 is sent from the air outlet 305 provided at the center portion of a seating surface 302A in the width direction toward the seated occupant.

FIG. 31 is a diagram showing the arrangement of the back side of a front pad 331 and an air cell 350 according to the first modified example. As shown in FIG. 31, fourteen storage recesses 331a for storing the air cells 350 are formed on the back side of the front pad 331. The storage recess 331a is composed of the storage recess 331a for storing a right air cell group 350A and the storage recess 331a for storing a left air cell group 350B and the storage recess 331a is not formed at the center portion in the width direction. Then, an air passage hole 331c guiding a gas blown by the blower 317 toward the air outlet 305 is formed at the center portion of the front pad 331. Accordingly, a gas blown by the blower 317 is guided to the air passage hole 331c and is guided toward an air outlet 305A provided at the center portion of the seating surface 302A in the width direction. Then, the gas having passed through the air outlet 305A is sent out from the below the buttocks toward the seated occupant. Accordingly, it is possible to cool the bottom of the seated occupant's buttocks and to effectively suppress the dampness of the seated occupant's buttocks.

### <Second modified example>

Next, an inflation and deflation pattern according to a second modified example will be described. In the above-described embodiments, it has been described that the gluteal, biceps femoris, and adductor muscles of the seated occupant are stimulated by controlling the flow of compressed air so that the air cell 350 is inflated and deflated, but only the adductor muscles may be stimulated.

The driver of the motorcycle V controls the position of the center of gravity and the traveling direction of the motorcycle V by performing a so-called "knee grip" while traveling. That is, the driver presses the fuel tank with his or her thighs and knees to sandwich the fuel tank therein. Therefore, if the driver continues to drive for a long period of time, the adductor muscles will be overworked, and fatigue will accumulate.

Here, the inflation and deflation pattern according to the second modified example controls the flow of compressed air so that the air cell 350 disposed at a position corresponding to the adductor muscles of the seated occupant is inflated and deflated. Specifically, the flow of compressed air is controlled so that the air cell 350 disposed at a position corresponding to a thigh contact surface 302Ab of the seating surface 302A is inflated and deflated.

Accordingly, it is possible to effectively reduce the fatigue of the seated occupant by stimulating the adductor muscles of the seated occupant driving the motorcycle V and promoting the blood flow in the thighs of the seated occupant by the massage effect.

<Third modified example>

Next, a compressed air control method according to a third modified example will be described. In the above-described embodiments, it has been described that a predetermined amount of compressed air is injected into the air cell 350 or discharged therefrom based on the inflation and deflation pattern. On the other hand, an air pressure sensor (not shown) may be provided in the air cell 350 and the injection amount of compressed air may be changed based on the output of the air pressure sensor. Accordingly, even when the air cell 350 is deformed by the body pressure applied by the seated occupant, it is possible to inject an appropriate amount of compressed air into the air cell 350 and to give a stimulus of appropriate strength to the seated occupant.

Further, the injection of compressed air may be stopped when the output of the air pressure sensor exceeds a certain value. Accordingly, it is possible to prevent the air cell 350 from being damaged due to excessive injection of compressed air.

### <Fourth modified example>

Next, a heating element according to a fourth modified example will be described. In the above-described embodiment, it has been described that the heating control is performed by the planar heating element 233 disposed on the upper surface of the front pad 231, but the present invention is not limited thereto. For example, compressed air injected into the air cell 350 may be heated to control the heating of the seating surface 302A by the air cell 350. In this case, for example, a heater may be built in a fluid supply device 340 and compressed air may be heated by the heater. Accordingly, since it is not necessary to dispose the planar heating element 333 below the seating surface 302A, the planar heating element 333 is not cut due to the body pressure of the seated occupant and hence the durability of a motorcycle seat 301 can be improved.

Further, in the above-described embodiment, it has been described that the fluid supply device 340 is built in the motorcycle seat 301. However, the fluid supply device 340 may be disposed on the vehicle body VB (motorcycle body) outside the motorcycle seat 301. In this way, the configuration in which the fluid supply device 240 disposed on the vehicle body VB controls the flow of compressed air injected into the air cell 350 disposed inside the motorcycle seat 201 is also included in the present invention.

The straddling-type seat according to this embodiment has been described above as an example of a vehicle seat that is mainly used for a two-wheeled vehicle. The straddling-type seat according to this embodiment is not limited to a vehicle seat for a two-wheeled vehicle, and can be applied to, for example, a snowmobile, a personal watercraft, a three-wheeled buggy, or a construction machine seat.

According to the straddling-type seat of the present invention, it is possible to reduce the fatigue of the seated occupant by promoting the blood flow of the seated occupant.

Furthermore, the following supplementary notes related to the embodiments described with reference to FIGS. 19 to 31 will be disclosed.

### (Supplementary Note 1)

A straddling-type seat having a seating surface on which a seated occupant sits, further including:
a plurality of bags which are arranged inside the seating surface and are able to store a fluid; and
a control unit which controls a flow of the fluid,
wherein the control unit controls the flow of the fluid so that the plurality of bags located at adjacent positions are inflated and deflated in a predetermined order.

### (Supplementary Note 2)

The straddling-type seat according to Supplementary Note 1,
wherein the plurality of bags include a plurality of right and left bags which are respectively arranged on the right and left sides of the right to left direction of the seat inside the seating surface.

### (Supplementary Note 3)

The straddling-type seat according to Supplementary Note 1, further including:
a plurality of pressure sensors which detect a pressure applied to the seating surface and are respectively associated with the plurality of bags,
wherein the control unit controls a flow of the fluid so that the bag corresponding to the pressure sensor detecting a pressure applied to the seating surface is inflated and deflated.

### (Supplementary Note 4)

The straddling-type seat according to Supplementary Note 1, further including:
a cushion material; and
a skin material which covers the cushion material and has the seating surface,
wherein a heating element is disposed between the cushion material and the skin material.

### (Supplementary Note 5)

The straddling-type seat according to Supplementary Note 1, further including:
a blowing machine; and
an air outlet which is provided on the rear side of the seating surface and sends a gas blown by the blowing machine.

### (Supplementary Note 6)

The straddling-type seat according to Supplementary Note 1, further including:
a blowing machine; and
an air outlet which is provided at a center portion of the seating surface in the width direction and sends a gas blown by the blowing machine.

### (Supplementary Note 7)

A method of controlling a fluid in a straddling-type seat having a seating surface on which a seated occupant sits,
wherein the straddling-type seat includes a plurality of bags which are arranged inside the seating surface and are able to store a fluid and a control unit which controls a flow of the fluid, and
wherein the control unit controls the flow of the fluid so that the plurality of bags located at adjacent positions are inflated and deflated in a predetermined order.

### (Supplementary Note 8)

A method of manufacturing a straddling-type seat having a seating surface on which a seated occupant sits, including:
a bag arrangement step of arranging a plurality of bags capable of storing a fluid on a cushion material;
a cushion material attachment step of attaching the cushion material to a base material of the straddling-type seat;
a control unit arrangement step of arranging a control unit, controlling a flow of the fluid so that the plurality of bags located at adjacent positions are inflated and deflated in a predetermined order, on the base material; and
a covering step of covering the cushion material with a skin material.

### REFERENCE SIGNS LIST

- V:: motorcycle
- VB:: vehicle body
- S:: seat body
- 1:: motorcycle seat (straddling-type seat)
- 2:: front seating portion (front seat)
- 3:: rear seating portion (rear seat)
- 10:: bottom plate
- 11:: front surface
11a: through-hole
- 12:: back surface
12a: striker
- 13:: storage recess
- 14:: bag storage portion
- 15a:: front locking portion
- 15b:: rear locking portion
- 16:: engagement recess
- C:: cushion material
- T:: skin material
- B:: backrest
- 20:: backrest bottom
- 21:: cushion material
- 22:: skin material
- 23:: support frame
- 24:: pipe frame (adjustment member)
24a: fitting slit
- R:: locking mechanism (locking device)
- 30:: lock bracket
30a: insertion hole
30b: insertion hole
30c: spring locking portion
- 31:: lock plate (lock member)
31a: elongated hole
31b: fitting hole
31c: spring locking portion
31d: unlocking lever (operation portion)
31e: bottom portion (lowermost portion)
31f: side wall
31g: connection portion
31h: bent portion
31i: protrusion portion
- 32:: lock cover (cover member)
32a: cover recess (recess)
32b: opening portion
32d: engagement claw
32e: guide storage portion
32f: notch
32g: extending portion
- 33:: connection pin
- 34:: guide tube
34a: engagement piece
34b: engagement piece
34c: passage port
- 35:: lock spring
- 40:: protection member
- 40a:: peripheral edge portion
- 40b:: protection portion
- 40c:: waterproof rib (rib portion)
- 50:: storage bag
51: belt
51a: front ring
52a: rear ring
- 110:: bottom plate
- 111:: front surface
111a: through-hole
111b: nut attachment hole
- 112:: back surface
112a: sandwiching portion
- 113:: storage recess
- 123:: support frame
- 124:: adjustment member
124a: plate portion
124b: fitting hole
- 140:: nut
- 141:: bolt
- 150:: lock cover (cover member)
- 151:: rib
- 201:: motorcycle seat (straddling-type seat)
- 202:: front seating portion
- 202A:: seating surface
202Aa: buttock support surface
202Ab: thigh contact surface
- 203:: rear seating portion
- 204:: non-seating portion
- 205:: air outlet
- 210:: bottom plate
- 211:: front portion
- 212:: inclined portion
- 213:: rear portion
- 214:: front surface
- 215:: back surface
- 216:: duct member
216a: opening portion
- 217:: blower (blowing machine)
- 218:: blower opening portion
- 220:: skin material
- 230:: cushion material
- 231:: front pad
231a: storage recess
231b: pad inclined portion
- 232:: rear pad
232a: notch portion
232b: opening hole
- 233:: planar heating element
- 240:: fluid supply device
- 241:: air supply pump
- 242:: valve unit
- 243:: tube
- 244:: ECU (control unit)
244a: memory
- 245:: temperature sensor
- 250:: air cell
250A: right air cell group
250B: left air cell group
- 251:: pressure sensor
- 301:: motorcycle seat (straddling-type seat)
- 302A:: seating surface
302Ab: thigh contact surface
- 305:: air outlet
- 317:: blower (blowing machine)
- 331:: front pad
331a: storage recess
331c: air passage hole
- 340:: fluid supply device
- 350:: air cell
350A: right air cell group
350B: left air cell group

## Claims

1. A straddling-type seat including a backrest movable with respect to a seat body,
wherein the backrest includes an adjustment member that extends in a moving direction of the backrest,
wherein the seat body includes a bottom plate through which the adjustment member is inserted, a lock member that comes into contact with the adjustment member to prohibit the movement of the backrest, and a cover member that covers the lock member, and
wherein the cover member completely covers the adjustment member.

2. The straddling-type seat according to claim 1,
wherein the cover member is provided with an extending portion which extends in a moving direction of the adjustment member, and
wherein the extending portion overlaps the adjustment member in an up to down direction of the straddling-type seat.

3. The straddling-type seat according to claim 1,
wherein the lock member includes an operation portion which is operated when moving the backrest,
wherein the operation portion protrudes toward the outside of the cover member,
wherein the cover member includes a recess which is recessed upward,
wherein the operation portion is disposed in the recess and protrudes outward from an opening portion formed in the cover member,
wherein the lock member includes a bent portion which is bent from the operation portion, and
wherein the bent portion is disposed to fill a gap between the operation portion and the opening portion in bottom view of the straddling-type seat.

4. The straddling-type seat according to claim 3,
wherein a length of a portion in which the bent portion and the cover member overlap each other in the up to down direction of the straddling-type seat in a locked state in which the movement of the backrest is prohibited is longer than a maximum movement amount of the lock member.

5. The straddling-type seat according to claim 3,
wherein the operation portion includes a bottom portion which extends in a width direction of the straddling-type seat and a connection portion which connects the bottom portion and the bent portion, and
wherein the bent portion is shorter than the connection portion.

6. The straddling-type seat according to claim 5,
wherein the operation portion includes a side wall which is formed at a position facing the connection portion in the width direction of the straddling-type seat to be bent from the bottom portion.

7. The straddling-type seat according to claim 1,
wherein the bottom plate is provided with a through-hole through which the adjustment member is inserted,
wherein a protection member is provided on the front side of the through-hole,
wherein the protection member includes a protection portion through which the adjustment member is inserted, and
wherein the protection portion is formed so that the upper side is longer than the lower side.

8. The straddling-type seat according to claim 7, further comprising:
a ring-shaped rib portion which is formed inside the protection portion to protrude inward,
wherein the rib portion comes into contact with an outer surface of the adjustment member.

9. The straddling-type seat according to claim 1,
wherein the lock member includes an operation portion which is operated when moving the backrest,
wherein a plurality of the adjustment members are provided,
wherein the operation portion is a plurality of bolts provided to engage with the plurality of adjustment members, and
wherein a reinforcing portion is provided between the plurality of bolts.
